(19)

Europäisches
Patentamt
European
Patent Office
Office européen
des brevets

(11) **EP 2 498 556 A1**

(12) # EUROPEAN PATENT APPLICATION

(43) Date of publication:
**12.09.2012 Bulletin 2012/37**

(51) Int Cl.:
***H04W 56/00*** (2009.01)

(21) Application number: **11001914.8**

(22) Date of filing: **08.03.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Panasonic Corporation
Kadoma-shi
Osaka 571-8501 (JP)**

(72) Inventors:
• **Feuersänger, Martin
63225 Langen (DE)**
• **Löhr, Joachim
63225 Langen (DE)**
• **Wengerter, Christian
63225 Langen (DE)**

(74) Representative: **Grünecker, Kinkeldey,
Stockmair & Schwanhäusser
Leopoldstrasse 4
80802 München (DE)**

(54) **Timing advance configuration for multiple uplink component carriers**

(57) The invention relates methods for time aligning uplink transmissions by a mobile terminal in a mobile communication system, and to methods for performing a handover of a mobile terminal to a target aggregation access point. The invention is also providing apparatus and system for performing these methods, and computer readable media the instructions of which cause the apparatus and system to perform the methods described herein. In order to allow for aligning the timing of uplink transmissions on uplink component carriers, where different propagation delays are imposed on the transmissions on the uplink component carriers, the inventions suggests to time align the uplink component carriers based on a reference time alignment of a reference cell and a reception time difference or propagation delay difference between the downlink transmissions in the reference cell and the other radio cells, the uplink component carriers of which need to be time aligned.

Fig. 15

**Description**

**FIELD OF THE INVENTION**

The invention relates methods for time aligning uplink transmissions by a mobile terminal in a mobile communication system. Furthermore, the invention relates to methods for performing a handover of a mobile terminal to a target aggregation access point. The invention is also providing apparatus and system for performing the methods described herein, as well as computer readable media the instructions of which cause the apparatus and system to perform the methods described herein.

**TECHNICAL BACKGROUND**

**Long Term Evolution (LTE)**

Third-generation mobile systems (3G) based on WCDMA radio-access technology are being deployed on a broad scale all around the world. A first step in enhancing or evolving this technology entails introducing High-Speed Downlink Packet Access (HSDPA) and an enhanced uplink, also referred to as High Speed Uplink Packet Access (HSUPA), giving a radio-access technology that is highly competitive.

In order to be prepared for further increasing user demands and to be competitive against new radio access technologies 3GPP introduced a new mobile communication system which is called Long Term Evolution (LTE). LTE is designed to meet the carrier needs for high speed data and media transport as well as high capacity voice support to the next decade. The ability to provide high bit rates is a key measure for LTE.

The work item (WI) specification on Long-Term Evolution (LTE) called Evolved UMTS Terrestrial Radio Access (UTRA) and UMTS Terrestrial Radio Access Network (UTRAN) is to be finalized as Release 8 (LTE Rel. 8). The LTE system represents efficient packet-based radio access and radio access networks that provide full IP-based functionalities with low latency and low cost. In LTE, scalable multiple transmission bandwidths are specified such as 1.4, 3.0, 5.0, 10.0, 15.0, and 20.0 MHz, in order to achieve flexible system deployment using a given spectrum. In the downlink, Orthogonal Frequency Division Multiplexing (OFDM) based radio access was adopted because of its inherent immunity to multipath interference (MPI) due to a low symbol rate, the use of a cyclic prefix (CP), and its affinity to different transmission bandwidth arrangements. Single-carrier frequency division multiple access (SC-FDMA) based radio access was adopted in the uplink, since provisioning of wide area coverage was prioritized over improvement in the peak data rate considering the restricted transmit power of the user equipment (UE). Many key packet radio access techniques are employed including multiple-input multiple-output (MIMO) channel transmission techniques, and a highly efficient control signaling structure is achieved in LTE Rel. 8/9.

**LTE architecture**

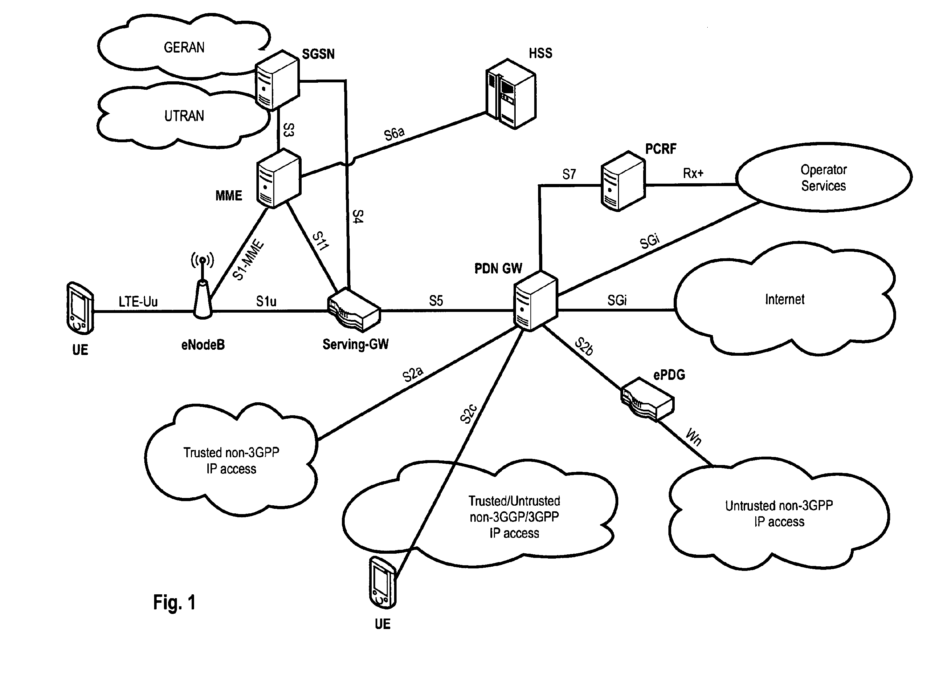

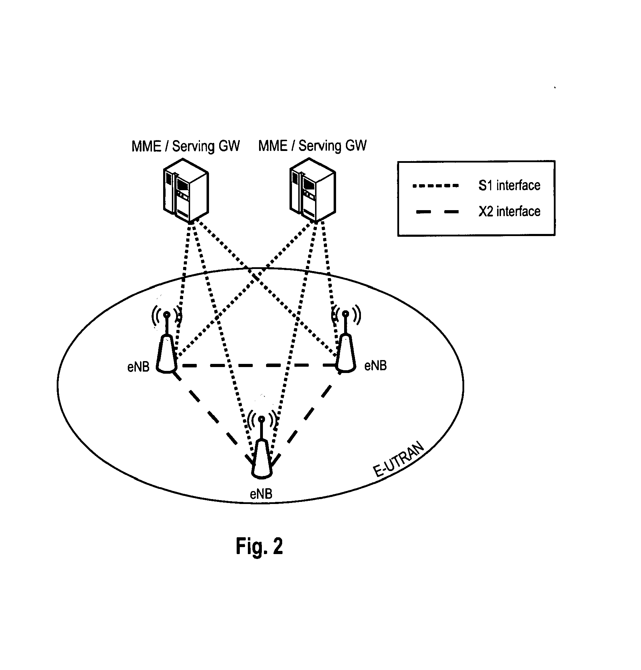

The overall architecture is shown in Fig. 1 and a more detailed representation of the E-UTRAN architecture is given in Fig. 2. The E-UTRAN consists of eNodeB, providing the E-UTRA user plane (PDCP/RLC/MAC/PHY) and control plane (RRC) protocol terminations towards the user equipment (UE). The eNodeB (eNB) hosts the Physical (PHY), Medium Access Control (MAC), Radio Link Control (RLC), and Packet Data Control Protocol (PDCP) layers that include the functionality of user-plane header-compression and encryption. It also offers Radio Resource Control (RRC) functionality corresponding to the control plane. It performs many functions including radio resource management, admission control, scheduling, enforcement of negotiated uplink Quality of Service (QoS), cell information broadcast, ciphering/deciphering of user and control plane data, and compression/decompression of downlink/uplink user plane packet headers. The eNodeBs are interconnected with each other by means of the X2 interface.

The eNodeBs are also connected by means of the S1 interface to the EPC (Evolved Packet Core), more specifically to the MME (Mobility Management Entity) by means of the S1-MME and to the Serving Gateway (SGW) by means of the S1-U. The S1 interface supports a many-to-many relation between MMEs/Serving Gateways and eNodeBs. The SGW routes and forwards user data packets, while also acting as the mobility anchor for the user plane during inter-eNodeB handovers and as the anchor for mobility between LTE and other 3GPP technologies (terminating S4 interface and relaying the traffic between 2G/3G systems and PDN GW). For idle state user equipments, the SGW terminates the downlink data path and triggers paging when downlink data arrives for the user equipment. It manages and stores user equipment contexts, e.g. parameters of the IP bearer service, network internal routing information. It also performs replication of the user traffic in case of lawful interception.

The MME is the key control-node for the LTE access-network. It is responsible for idle mode user equipment tracking and paging procedure including retransmissions. It is involved in the bearer activation/deactivation process and is also responsible for choosing the SGW for a user equipment at the initial attach and at time of intra-LTE handover involving Core Network (CN) node relocation. It is responsible for authenticating the user (by interacting with the HSS). The Non-Access Stratum (NAS) signaling terminates at the MME and it is also responsible for generation and allocation of temporary identities to user equipments. It checks the authorization of the user equipment to camp on the service provider's Public Land Mobile Network (PLMN) and enforces user equipment roaming restrictions. The MME is the termination point in the network for ciphering/integrity protection for NAS signaling and handles the security key management. Lawful interception of signaling is also supported by the MME. The MME also provides the control plane function for mobility between LTE and 2G/3G access networks with the S3 interface terminating at the MME from the SGSN. The MME also terminates the S6a interface towards the home HSS for roaming user equipments.

## Component Carrier Structure in LTE (Release 8)

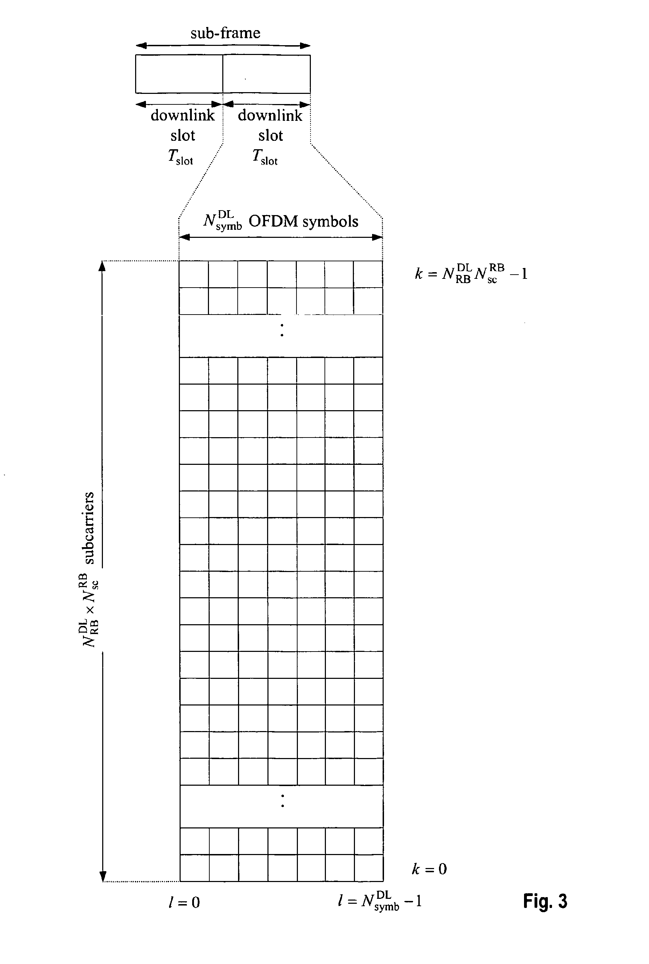

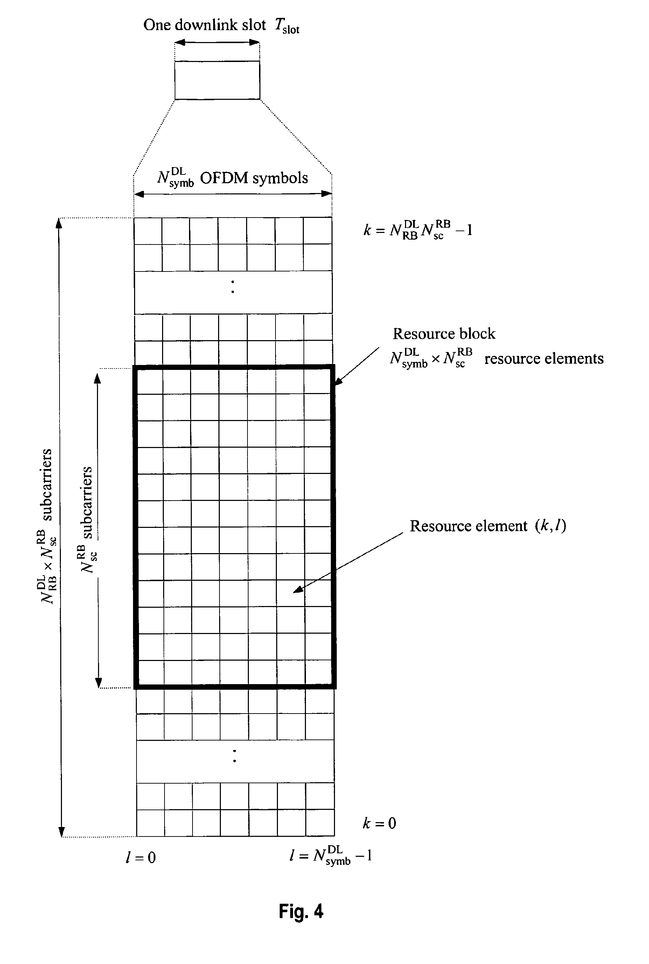

The downlink component carrier of a 3GPP LTE (Release 8) is subdivided in the time-frequency domain in so-called sub-frames. In 3GPP LTE (Release 8) each sub-frame is divided into two downlink slots as shown in Fig. 3, wherein the first downlink slot comprises the control channel region (PDCCH region) within the first OFDM symbols. Each sub-frame consists of a give number of OFDM symbols in the time domain (12 or 14 OFDM symbols in 3GPP LTE (Release 8)), wherein each of OFDM symbol spans over the entire bandwidth of the component carrier. The OFDM symbols are thus each consists of a number of modulation symbols transmitted on respective $N_{\mathrm{RB}}^{\mathrm{DL}} \times N_{\mathrm{sc}}^{\mathrm{RB}}$ subcarriers as also shown in Fig. 4.

Assuming a multi-carrier communication system, e.g. employing OFDM, as for example used in 3GPP Long Term Evolution (LTE), the smallest unit of resources that can be assigned by the scheduler is one "resource block". A physical resource block is defined as $N_{\mathrm{symb}}^{\mathrm{DL}}$ consecutive OFDM symbols in the time domain and $N_{\mathrm{sc}}^{\mathrm{RB}}$ consecutive subcarriers in the frequency domain as exemplified in Fig. 4. In 3GPP LTE (Release 8), a physical resource block thus consists of $N_{\mathrm{symb}}^{\mathrm{DL}} \times N_{\mathrm{sc}}^{\mathrm{RB}}$ resource elements, corresponding to one slot in the time domain and 180 kHz in the frequency domain (for further details on the downlink resource grid, see for example 3GPP TS 36.211, "Evolved Universal Terrestrial Radio Access (E-UTRA); Physical Channels and Modulation (Release 8)", version 8.9.0 or 9.0.0, section 6.2, available at http://www.3gpp.org and incorporated herein by reference).

## Further Advancements for LTE (LTE-A)

The frequency spectrum for IMT-Advanced was decided at the World Radiocommunication Conference 2007 (WRC-07). Although the overall frequency spectrum for IMT-Advanced was decided, the actual available frequency bandwidth is different according to each region or country. Following the decision on the available frequency spectrum outline, however, standardization of a radio interface started in the 3rd Generation Partnership Project (3GPP). At the 3GPP TSG RAN #39 meeting, the Study Item description on "Further Advancements for E-UTRA (LTE-Advanced)" was approved. The study item covers technology components to be considered for the evolution of E-UTRA, e.g. to fulfill the requirements on IMT-Advanced.

*Carrier Aggregation in L TE-A for support of wider bandwidth*

In carrier aggregation, two or more component carriers (component carriers) are aggregated in order to support wider transmission bandwidths up to 100MHz. All component carriers can be configured to be LTE Rel. 8/9 compatible, at least when the aggregated numbers of component carriers in the uplink and the downlink are the same. Not all component carriers aggregated by a user equipment may necessarily be Rel. 8/9 compatible.

A user equipment may simultaneously receive or transmit one or multiple component carriers depending on its capabilities. A LTE-A Rel. 10 user equipment with reception and/or transmission capabilities for carrier aggregation can simultaneously receive and/or transmit on multiple component carriers whereas an LTE Rel. 8/9 user equipment can receive and transmit on a single component carrier only, provided that the structure of the component carrier follows the Rel. 8/9 specifications.

Carrier aggregation is supported for both contiguous and non-contiguous component carriers with each component carrier limited to a maximum of 110 Resource Blocks in the frequency domain using the Rel. 8/9 numerology. It is possible to configure a user equipment to aggregate a different number of component carriers originating from the same eNodeB and of possibly different bandwidths in the uplink and the downlink:

- The number of downlink component carriers that can be configured depends on the downlink aggregation capability of the user equipment;

- The number of uplink component carriers that can be configured depends on the uplink aggregation capability of the user equipment;

- it is not possible to configure a user equipment with more uplink component carriers than downlink component carriers;

- In typical TDD deployments, the number of component carriers and the bandwidth of each component carrier in uplink and downlink is the same.

Component carriers originating from the same eNodeB need not to provide the same coverage.

The spacing between centre frequencies of contiguously aggregated component carriers shall be a multiple of 300 kHz. This is in order to be compatible with the 100 kHz frequency raster of Rel. 8/9 and at the same time preserve orthogonality of the subcarriers with 15 kHz spacing. Depending on the aggregation scenario, the n x 300 kHz spacing can be facilitated by insertion of a low number of unused subcarriers between contiguous component carriers.

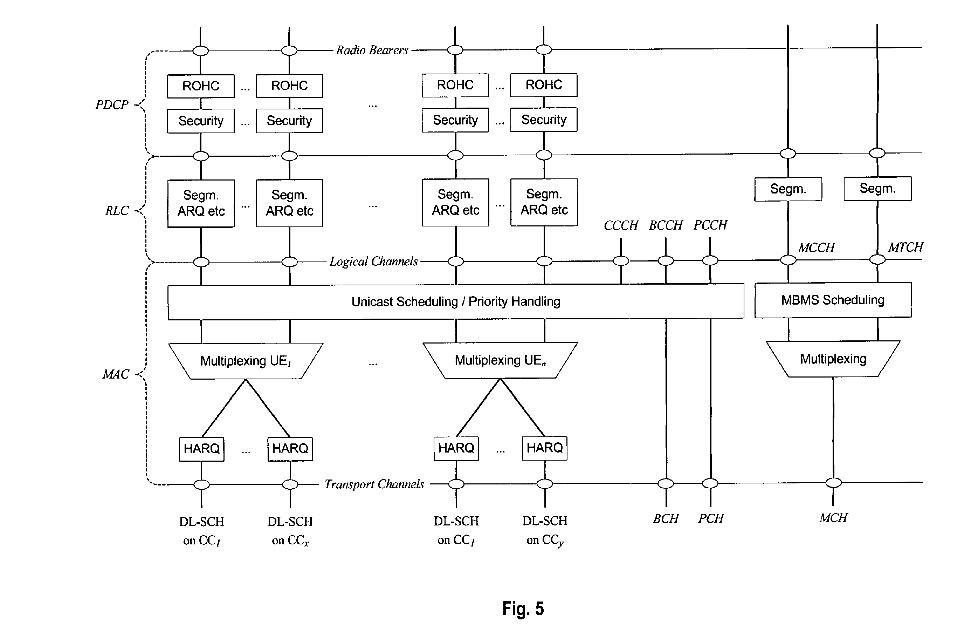

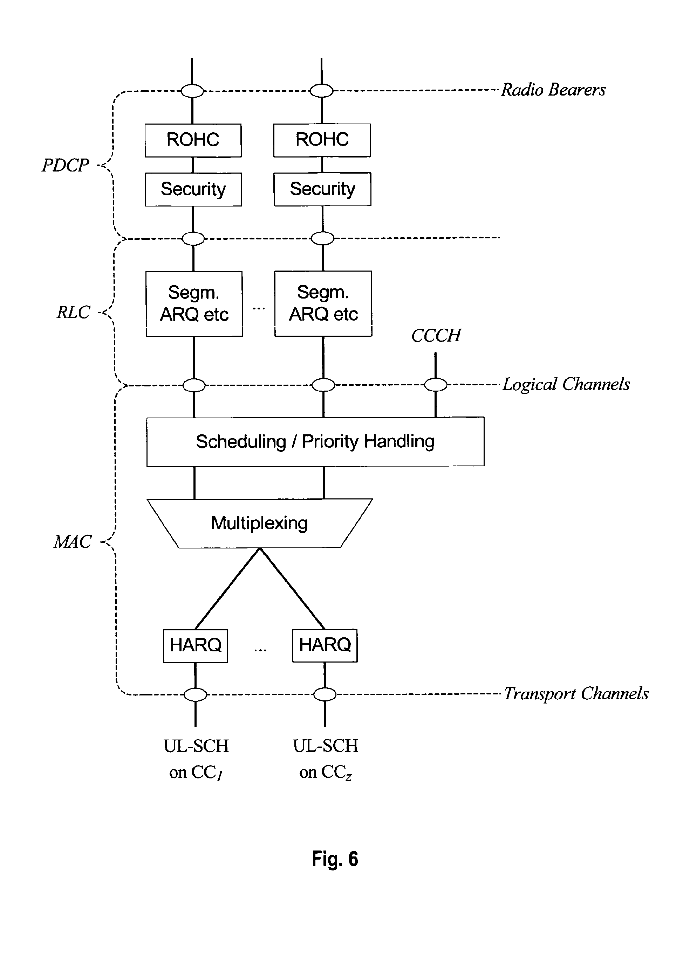

The nature of the aggregation of multiple carriers is only exposed up to the MAC layer. For both uplink and downlink there is one HARQ entity required in MAC for each aggregated component carrier. There is (in the absence of SU-MIMO - Single User Multiple Input Multiple Output - for uplink) at most one transport block per component carrier. A transport block and its potential HARQ retransmissions need to be mapped on the same component carrier. The Layer 2 structure with activated carrier aggregation is shown in Fig. 5 and Fig. 6 for the downlink and uplink respectively.

When carrier aggregation is configured, the user equipment only has one RRC connection with the network. At RRC connection establishment/re-establishment, one cell provides the security input (one ECGI, one PCI and one ARFCN) and the non-access stratum mobility information (e.g. TAI) similarly as in LTE Rel. 8/9. After RRC connection establishment/re-establishment, the component carrier corresponding to that cell is referred to as the downlink Primary Cell (PCell). There is always one and only one downlink PCell (DL PCell) and one uplink PCell (UL PCell) configured per user equipment in connected mode. Within the configured set of component carriers, other cells are referred to as Secondary Cells (SCells). The characteristics of the downlink and uplink PCell are:

- The uplink PCell is used for transmission of Layer 1 uplink control information

- The downlink PCell cannot be de-adtivated

- Re-establishment is triggered when the downlink PCell experiences Rayleigh fading (RLF), not when downlink SCells experience RLF

- The downlink PCell cell can change with handover

- Non-access stratum information is taken from the downlink PCelll.

The reconfiguration, addition and removal of component carriers can be performed by RRC. At intra-LTE handover, RRC can also add, remove, or reconfigure component carriers for usage in the target cell. When adding a new component carrier, dedicated RRC signaling is used for sending component carriers' system information which is necessary for component carrier transmission / reception (similarly as in LTE Rel. 8/9 for handover).

When carrier aggregation is configured, a user equipment may be scheduled over multiple component carriers simultaneously, but at most one random access procedure should be ongoing at any time. Cross-carrier scheduling allows the Physical Downlink Control Channel (PDCCH) of a component carrier to schedule resources on another component carrier. For this purpose a component carrier identification field (CIF) is introduced in the respective Downlink Control Information (DCI) formats. A linking between uplink and downlink component carriers allows identifying the uplink component carrier for which the grant applies when there is no-cross-carrier scheduling. The linkage of downlink component carriers to uplink component carriers does not necessarily need to be one to one. In other words, more than one downlink component carrier can link to the same uplink component carrier. At the same time, a downlink component carrier can only link to one uplink component carrier.

**Timing Advance**

As already mentioned above, for the uplink transmission scheme of 3GPP LTE single-carrier frequency division multiple access (SC-FDMA) was chosen to achieve an orthogonal multiple-access in time and frequency between the different user equipments transmitting in the uplink.

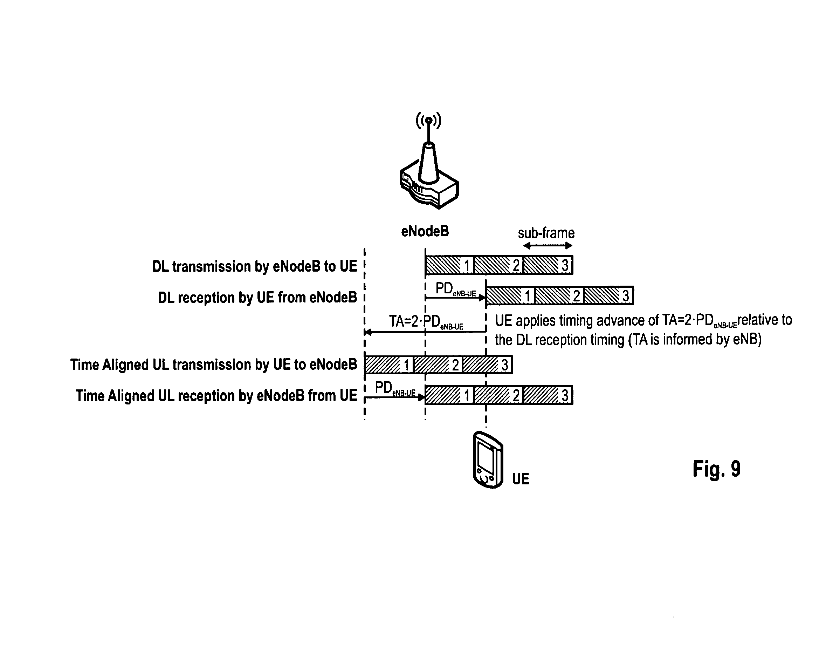

Uplink orthogonality is maintained by ensuring that the transmissions from different user equipments in a cell are time-aligned at the receiver of the eNodeB. This avoids intra-cell interference occurring, both between user equipments assigned to transmit in consecutive sub-frames and between user equipments transmitting on adjacent subcarriers. Time alignment of the uplink transmissions is achieved by applying a timing advance at the user equipment's transmitter, relative to the received downlink timing as exemplified in Fig. 9. The main role of this is to counteract differing propagation delays between different user equipments.

*Initial Timing Advance Procedure*

When user equipment is synchronized to the downlink transmissions received from eNodeB, the initial timing advance is set by means of the random access procedure as described below. The user equipment transmits a random access preamble based on which the eNodeB can estimate the uplink timing. The eNodeB responds with an 11-bit initial timing advance command contained within the Random Access Response (RAR) message. This allows the timing advance to be configured by the eNodeB with a granularity of 0.52 $\mu$s from 0 up to a maximum of 0.67 ms.

Additional information on the control of the uplink timing and timing advance on 3GPP LTE (Release 8/9) can be found in chapter 20.2 of Stefania Sesia, Issam Toufik and Matthew Baker, "LTE — The UMTS Long Term Evolution: From Theory to Practice", John Wiley & Sons, Ltd. 2009, which is incorporated herein by reference.

*Updates of the Timing Advance*

Once the timing advance has been first set for each user equipment, the timing advance is updated from time to time to counteract changes in the arrival time of the uplink signals at the eNodeB. In deriving the timing advance update commands, the eNodeB may measure any uplink signal which is useful. The details of the uplink timing measurements at the eNodeB are not specified, but left to the implementation of the eNodeB.

The timing advance update commands are generated at the Medium Access Control (MAC) layer in the eNodeB and transmitted to the user equipment as MAC control elements which may be multiplexed together with data on the Physical Downlink Shared Channel (PDSCH). Like the initial timing advance command in the response to the Random Access Channel (RACH) preamble, the update commands have a granularity of 0.52 $\mu$s. The range of the update commands is $\pm$16 $\mu$s, allowing a step change in uplink timing equivalent to the length of the extended cyclic prefix. They would typically not be sent more frequently than about every 2 seconds. In practice, fast updates are unlikely to be necessary, as even for a user equipment moving at 500 km/h the change in round-trip path length is not more than 278 m/s, corresponding to a change in round-trip time of 0.93 $\mu$s/s.

The eNodeB balances the overhead of sending regular timing update commands to all the UEs in the cell against a UE's ability to transmit quickly when data arrives in its transmit buffer. The eNodeB therefore configures a timer for each user equipment, which the user equipment restarts each time a timing advance update is received. In case the user equipment does not receive another timing advance update before the timer expires, it must then consider that it has lost uplink synchronization (see also section 5.2 of 3GPP TS 36.321, "Evolved Universal Terrestrial Radio Access (E-UTRA); Medium Access Control (MAC) protocol specification", version 8.9.0, available at http://www.3gpp.org and incorporated herein by reference).

In such a case, in order to avoid the risk of generating interference to uplink transmissions from other user equipments, the UE is not permitted to make another uplink transmission of any sort and needs to revert to the initial timing alignment procedure in order to restore the uplink timing.

**Random Access Procedure**

A mobile terminal in LTE can only be scheduled for uplink transmission, if its uplink transmission is time synchronized. Therefore the Random Access (RACH) procedure plays an important role as an interface between non-synchronized mobile terminals (UEs) and the orthogonal transmission of the uplink radio access.

Essentially the Random Access in LTE is used to achieve uplink time synchronization for a user equipment which either has not yet acquired, or has lost, its uplink synchronization. Once a user equipment has achieved uplink synchronization the eNodeB can schedule uplink transmission resources for it. The following scenarios are therefore relevant for random access:

- A user equipment in RRC_CONNECTED state, but not uplink-synchronized, wishing to send new uplink data or control information

- A user equipment in RRC_CONNECTED state, but not uplink-synchronized, required to receive downlink data, and therefore to transmit corresponding HARQ feedback, i.e. ACK/NACK, in the uplink. This scenario is also referred to as Downlink data arrival

- A user equipment in RRC_CONNECTED state, handing over from its current serving cell to a new target cell; in order to achieve uplink time-synchronization in the target cell Random Access procedure is performed

- A transition from RRC_IDLE state to RRC_CONNECTED, for example for initial access or tracking area updates

- Recovering from radio link failure, i.e. RRC connection re-establishment

There is one more additional case, where user equipment performs random access procedure, even though user equipment is time-synchronized. In this scenario the user equipment uses the random access procedure in order to send a scheduling request, i.e. uplink buffer status report, to its eNodeB, in case it does not have any other uplink resource allocated in which to send the scheduling request, i.e. dedicated scheduling request (D-SR) channel is not configured.

LTE offers two types of random access procedures that allow access to be either contention based, i.e. implying an inherent risk of collision, or contention-free (non-contention based). It should be noted that contention-based random access can be applied for all six scenarios listed above, whereas a non-contention based random access procedure can only be applied for the downlink data arrival and handover scenario.

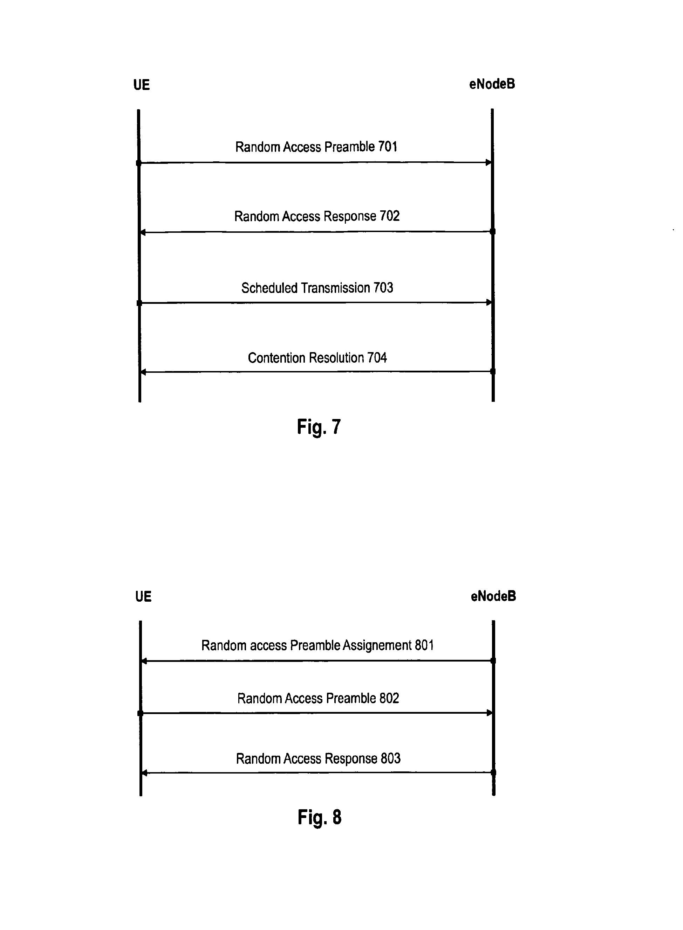

In the following the contention based random access procedure is being described in more detail with respect to Fig. 7. A detailed description of the random access procedure can be also found in 3GPP 36.321, section 5.1.

Fig. 7 shows the contention based RACH procedure of LTE. This procedure consists of four "steps". First, the user equipment transmits 701 a random access preamble on the Physical Random Access Channel (PRACH) to the eNodeB. The preamble is selected by user equipment from the set of available random access preambles reserved by eNodeB for contention based access. In LTE, there are 64 preambles per cell which can be used for contention-free as well as contention based random access. The set of contention based preambles can be further subdivided into two groups, so that the choice of preamble can carry one bit of information to indicate information relating to the amount of transmission resources needed to transmit for the first scheduled transmission, which is referred to as msg3 in TS36.321 (see step 703). The system information broadcasted in the cell contain the information which signatures (preambles) are in each of the two subgroups as well as the meaning of each subgroup. The user equipment randomly selects one preamble from the subgroup corresponding to the size of transmission resource needed for message 3 transmission.

After eNodeB has detected a RACH preamble, it sends 702 a Random Access Response (RAR) message on the PDSCH (Physical Downlink Shared Channel) addressed on the PDCCH with the (Random Access) RA-RNTI identifying the time-frequency slot in which the preamble was detected. If multiple user equipments transmitted the same RACH preamble in the same PRACH resource, which is also referred to as collision, they would receive the same random access response.

The RAR message conveys the detected RACH preamble, a timing alignment command (TA command) for synchronization of subsequent uplink transmissions, an initial uplink resource assignment (grant) for the transmission of the first scheduled transmission (see step 703) and an assignment of a Temporary Cell Radio Network Temporary Identifier (T-CRNTI). This T-CRNTI is used by eNodeB in order to address the mobile(s) whose RACH preamble were detected until RACH procedure is finished, since the "real" identity of the mobile is at this point not yet known by eNodeB.

Furthermore the RAR message can also contain a so-called back-off indicator, which the eNodeB can set to instruct the user equipment to back off for a period of time before retrying a random access attempt. The user equipment monitors the PDCCH for reception of random access response within a given time window, which is configured by the eNodeB. In case user equipment doesn't receive a random access response within the configured time window, it retransmits the preamble at the next PRACH opportunity considering a potentially back off period.

In response to the RAR message received from the eNodeB, the user equipment transmits 703 the first scheduled uplink transmission on the resources assigned by the grant within the random access response. This scheduled uplink transmission conveys the actual random access procedure message like for example RRC connection request, tracking area update or buffer status report. Furthermore it includes either the C-RNTI for user equipments in RRC_CONNECTED mode or the unique 48-bit user equipment identity if the user equipments are in RRC_IDLE mode. In case of a preamble collision having occurred, i.e. multiple user equipments have sent the same preamble on the same PRACH resource, the colliding user equipments will receive the same T-CRNTI within the random access response and will also collide in the same uplink resources when transmitting 703 their scheduled transmission. This may result in interference that no transmission from a colliding user equipment can be decoded at the eNodeB, and the user equipments will restart the random access procedure after having reached maximum number of retransmission for their scheduled transmission. In case the scheduled transmission from one user equipment is successfully decoded by eNodeB, the contention remains unsolved for the other user equipments.

For resolution of this type of contention, the eNode B sends 704 a contention resolution message addressed to the C-RNTI or Temporary C-RNTI, and, in the latter case, echoes the 48-bit user equipment identity contained the scheduled transmission. It supports HARQ. In case of collision followed by a successful decoding of the message sent in step 703, the HARQ feedback (ACK) is only transmitted by the user equipment which detects its own identity, either C-RNTI or unique user equipment ID. Other UEs understand that there was a collision at step 1 and can quickly exit the current RACH procedure and starts another one.

Fig. 8 is illustrating the contention-free random access procedure of 3GPP LTE Rel. 8/9. In comparison to the contention based random access procedure, the contention-free random access procedure is simplified. The eNodeB provides 801 the user equipment with the preamble to use for random access so that there is no risk of collisions, i.e. multiple user equipment transmitting the same preamble. Accordingly, the user equipment is sending 802 the preamble which was signaled by eNodeB in the uplink on a PRACH resource. Since the case that multiple UEs are sending the same preamble is avoided for a contention-free random access, no contention resolution is necessary, which in turn implies that step 704 of the contention based procedure shown in Fig. 7 can be omitted. Essentially a contention-free random access procedure is finished after having successfully received the random access response.

**Timing Advance and Component Carrier Aggregation in the Uplink**

In currents specifications of the 3GPP standards the user equipment only maintains one timing advance value and applies this to uplink transmissions on all aggregated component carriers. When component carriers are aggregated from different bands, they can experience different interference and coverage characteristics.

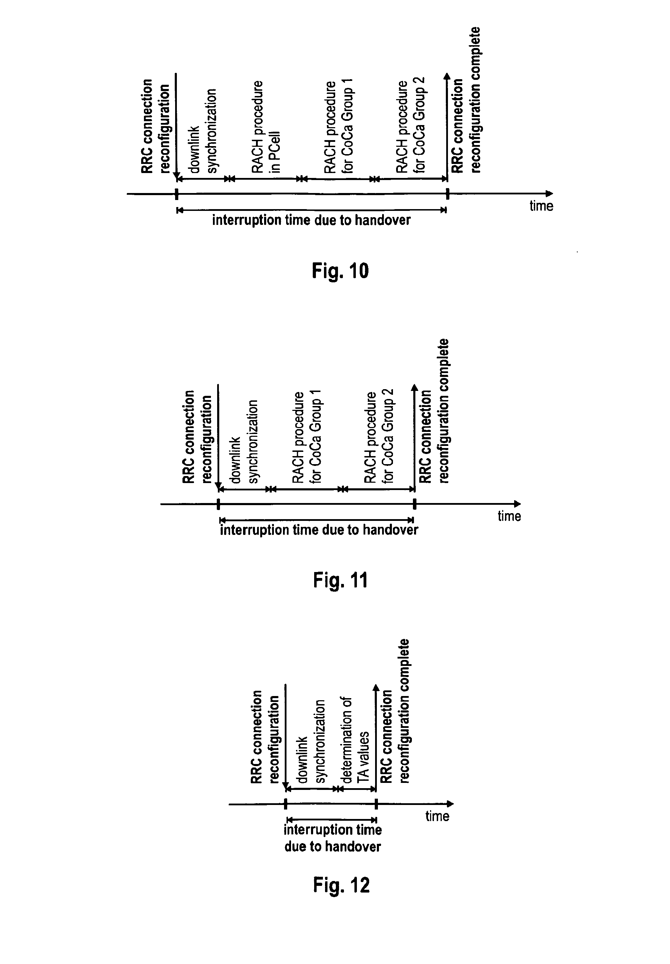

Furthermore the deployment of technologies like Frequency Selective Repeaters (FSR) as shown for example in Fig. 9 and Remote Radio Heads (RRH) as shown for example in Fig. 10 will cause different interference and propagation scenarios for the aggregated component carriers. This leads to the need of introducing more than one timing advance within one user equipment.

Discussions were already held in 3GPP on this problem but a single timing advance for all aggregated uplink component carriers is regarded as sufficient, since current specifications up to 3GPP LTE-A Rel. 10 support only carrier aggregation of carriers from the same frequency band.

**SUMMARY OF THE INVENTION**

One object of the invention is to propose a mechanism for aligning the timing of uplink transmissions on uplink component carriers, where different propagation delays are imposed on the transmissions on the uplink component carriers. Another object of the invention is to suggest a mechanism for allowing a mobile terminal to perform time alignment of uplink component carriers, without performing a random access procedure.

The object is solved by the subject matter of the independent claims. Advantageous embodiments are subject to the dependent claims. A further object is to propose handover mechanisms that allow reducing the handover delay due to time alignment of multiple uplink component carriers.

According to one aspect of the invention, the mobile terminal time aligns a non-time aligned uplink component carrier of a radio cell relative to a reference cell in which a (reference) uplink component carrier is already time aligned. The determination of the timing advance for time alignment of the non-time aligned uplink component carrier of the radio cell is thereby determined based on the timing advance for the (uplink component carrier of the) reference cell and the time difference of the reception times (also referred to as "reception time difference" in the following) for corresponding downlink transmissions via the downlink component carriers of the reference cell and the radio cell comprising the non-time aligned uplink component carrier.

As will become apparent, the time alignment of the non-aligned uplink component carrier can be performed relative to the reception timing of the downlink component carrier of the reference cell or relative to the reception timing of the downlink component carrier of the radio cell comprising the uplink component carrier.

One exemplary embodiment of the invention is related to a method for time aligning uplink transmissions by a mobile terminal in a mobile communication system. The mobile terminal is configured with a first radio cell comprising a downlink component carrier and a time aligned uplink component carrier, and a second radio cell comprising a downlink component carrier and a non-time aligned uplink component carrier.

In this method, the mobile terminal determines a reception time difference (or propagation delay difference) for downlink transmissions from an aggregation access point to the mobile terminal via the downlink component carrier of the first radio cell and via the downlink component carrier of the second radio cell, respectively, and time aligns the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference (or propagation delay difference), so that uplink transmissions transmitted from the mobile terminal to the aggregation access point via the uplink component carrier of the first radio cell and the uplink component carrier of the second radio cell arrives at the aggregation access point simultaneously.

In one exemplary implementation of this embodiment, the downlink component carrier and the uplink component carrier of one of the radio cells may be for example established between the aggregation access point and the mobile terminal, while the downlink component carrier and the uplink component carrier of the other radio cell may be established between another access point and the mobile terminal.

The other access point could for example maintain a bi-directional interface to the aggregation access point via which transmissions from and to the mobile terminal are forwarded to the aggregation access point, respectively, to the mobile terminal.

In this exemplary implementation, the determined reception time difference (or propagation delay difference) determined by the mobile terminal may for example account for a propagation delay of transmissions between the aggregation access point and the other access point, a processing delay of the other access point for processing the transmissions to be forwarded and a propagation delay of transmissions between the other access point and the mobile terminal.

In one exemplary implementation, the aggregation access point may be an eNodeB. In another implementation, the other access point could be for example a Frequency Selective Repeater (FSR) or a Remote Radio Head (RRH) controlled by the aggregation access point.

According to a further embodiment of the invention, the uplink data is transmitted by the mobile terminal via the time aligned first component carrier and the time aligned second component carrier to the aggregation access point, which combines the uplink transmissions of the mobile terminal received via the time aligned first component carrier and the time aligned second component carrier.

The combination of the uplink transmissions by the aggregation access point may occur in one of different layers. For example, the combination of the uplink data of the mobile terminal could be performed by the RLC entity of the aggregation access point. This may be for example the case in a scenario where the aggregation access point is an eNodeB and the other access point is a RRH.

Alternatively, the combination of the uplink data of the mobile terminal is performed by the physical layer entity of the aggregation access point. This may be for example the case in a scenario where the aggregation access point is an eNodeB and the other access point is a FSR.

There a different possibilities how the uplink component carrier of the first radio cell becomes time aligned. In one exemplary embodiment of the invention, the uplink component carrier of the first radio cell is time aligned by the mobile terminal and an access point by performing a random access procedure (also denoted: RACH procedure) configuring the timing advance for the uplink component carrier of the first radio cell. Advantageously, the uplink component carrier of the second radio cell is time aligned without performing a random access procedure with an access point. In one exemplary embodiment, the access point performing the RACH procedure with the mobile terminal is the aggregation access point.

in one exemplary implementation the mobile terminal receives a command from the aggregation access point to time align the uplink component carrier of the second radio cell based on the reception time difference (or propagation delay difference). For example, the command may be included within a RRC Radioresource Configuration Message.

The command may be for example signaled by means of a flag indicating whether the mobile terminal is to use a random access procedure for time aligning the uplink component carrier of the second radio cell or whether to time align the uplink component carrier of the second radio cell based on the reception time difference (or propagation delay difference) relative to a downlink component carrier of a reference radio cell (i.e. using the terminology above, the downlink component carrier of the first cell).

In a further embodiment of the invention, the mobile terminal determines a reception time difference (or propagation delay difference) for a downlink transmissions comprises calculating the reception time difference (or propagation delay difference) by subtracting the time of the beginning of a sub-frame received via the downlink component carrier of the second cell from a time of the beginning of the next sub-frame received via the downlink component carrier of the first cell. The beginning of the next sub-frame means the beginning of the next sub-frame that is received via the downlink component carrier of the first cell after the point in time of the beginning of the sub-frame received via the downlink component carrier of the second cell.

In another embodiment of the invention, for time alignment of the uplink component carriers of a mobile node, the mobile node could for example maintain a respective timing advance value for each uplink component carrier. In an alternative embodiment of the invention, a scenario is considered, where it is possible that plural component carriers have the same propagation delay, then these component carriers can be grouped and be associated with a respective timing advance value. Hence, in this case the mobile node may for example maintain a respective timing advance value for each group of one or more uplink component carriers, wherein uplink transmissions on the one or more uplink component carriers of a group experience the same propagation delay.

In a further exemplary implementation, the timing advance values for the uplink component carriers are determined to ensure that an uplink transmission via the uplink component carriers arrives at the aggregation access point simultaneously.

In one exemplary embodiment, the timing advance value for an uplink component carrier of a given radio cell may be considered to indicate a time shift for the transmission of uplink sub-frames on the uplink component carrier of the given radio cell relative to the beginning of sub-frames received via the downlink component carrier of the given radio cell (e.g. the second radio cell mentioned above). In an alternative embodiment of the invention, the timing advance value for an uplink component carrier of a given radio cell may be considered to indicate a time shift for the transmission of uplink sub-frames on the uplink component carrier of the given radio cell relative to the beginning of sub-frames received via the downlink component carrier of the reference cell (e.g. the first radio cell mentioned above).

In one exemplary embodiment of the invention, time aligning the uplink component carrier of the second radio cell comprises calculating a timing advance value for the uplink component carrier of the second cell, $TA_{AP2}$, based on the on the timing advance value for the time aligned uplink component carrier of the first radio cell, $TA_{AP1}$, and the determined reception time difference (or propagation delay difference), $\Delta T_{prop}$, as follows:

$$TA_{AP2} = TA_{AP1} + 2 \cdot \Delta T_{prop}$$

In this exemplary embodiment, the timing advance value $TA_{AP2}$ is defining the timing advance relative to the reception timing of the downlink component carrier of the second radio cell (or to be more precise the relative to the reception timing of the beginning of sub-frames transmitted via the downlink component carrier of the second radio cell).

In another exemplary embodiment of the invention, time aligning the uplink component carrier of the second radio cell comprises calculating a timing advance value for the uplink component carrier of the second cell, $TA_{AP2}$, based on the on the timing advance value for the time aligned uplink component carrier of the first radio cell, $TA_{AP1}$, and the determined reception time difference (or propagation delay difference), $\Delta T_{prop}$, as follows:

$$TA_{AP2} = TA_{AP1} + \Delta T_{prop}$$

In this exemplary embodiment, the timing advance value $TA_{AP2}$ is defining the timing advance relative to the reception timing of the downlink component carrier of the first radio cell (or to be more precise the relative to the reception timing of the beginning of sub-frames transmitted via the downlink component carrier of the first radio cell).

Another second aspect of the invention is to suggest a procedure for time alignment of uplink component carriers for use in a handover procedure of a mobile terminal. The time alignment procedure as discussed above may be also used for time aligning uplink component carriers in radio cells controlled by the target (aggregation) access point to which the mobile terminal is handed over. According to this aspect, the timing advance for one of the uplink component carriers in a radio cell (i.e. the reference cell) of the target (aggregation) access point may be either provided to the mobile terminal (synchronized handover) or may be determined by the mobile terminal (non-synchronized handover), e.g. by means of performing a random access procedure. The other uplink component carrier(s) of the other radio cell (s) to be used by the mobile terminal may then be time aligned relative to the reference cell as described previously herein.

In line with this second aspect and in accordance with a further embodiment of the invention, a method for performing a handover of a mobile terminal to a target aggregation access point (e.g. a eNodeB) is provided. The mobile terminal is to be configured, under control of the target aggregation access point, with a first radio cell comprising a downlink component carrier and an uplink component carrier, and a second radio cell comprising a downlink component carrier and an uplink component carrier.

The mobile terminal performs a random access procedure with the target aggregation access point to thereby time align the uplink component carrier of the first radio cell. The mobile terminal can then determine a reception time difference (or propagation delay difference) for downlink transmissions from the target aggregation access point to the mobile terminal via the downlink component carrier of the first radio cell and via the downlink component carrier of the second radio cell, and may time align the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference (or propagation delay difference), so that an uplink transmission transmitted from the mobile terminal to the aggregation access point via the uplink component carrier of the first radio cell and via the uplink component carrier of the second radio cell arrives at the aggregation access point simultaneously.

Also in line with this second aspect and in accordance with another embodiment of the invention, a method for performing a handover of a mobile terminal from a source access point to a target aggregation access point is provided. The mobile terminal is again assumed to be configured, under control of the target aggregation access point, with a first radio cell comprising a downlink component carrier and an uplink component carrier, and a second radio cell comprising a downlink component carrier and an uplink component carrier.

In this method, the mobile terminal receives through a radio cell controlled by the source access point, a timing advance value that indicated the time alignment to be applied by the mobile terminal to uplink transmissions on the uplink component carrier of the first radio cell. The mobile terminal may further determine a reception time difference (or propagation delay difference) for downlink transmissions from the target aggregation access point to the mobile terminal via the downlink component carrier of the first radio cell and via the downlink component carrier of the second radio cell, and may then time align the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference (or propagation delay difference), so that an uplink transmission transmitted from the mobile terminal to the aggregation access point via the uplink component carrier of the first radio cell and via the uplink component carrier of the second radio cell arrives at the aggregation access point simultaneously.

The source access point and the target aggregation access point may be for example eNodeBs.

In another embodiment, the two handover methods above may be further comprising the steps of the method for time aligning uplink transmissions by a mobile terminal in a mobile communication system according to one of the various exemplary embodiments described herein.

Another embodiment of the invention relates to a mobile terminal for time aligning uplink transmissions in a mobile communication system. The mobile terminal is configured with a first radio cell comprising a downlink component carrier and a time aligned uplink component carrier, and a second radio cell comprising a downlink component carrier and a non-time aligned uplink component carrier. In this embodiment, the mobile terminal comprises a receiver unit adapted to receive downlink transmissions, and a processing unit adapted to determine a reception time difference (or propagation delay difference) for a downlink transmission from an aggregation access point to the mobile terminal via the downlink component carrier of the first radio cell and via the downlink component carrier of the second radio cell, respectively. The processing unit time aligns the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference (or propagation delay difference). Further, the mobile terminal comprises a transmitter unit adapted to transmit an uplink transmission to the aggregation access point via the time aligned uplink component carrier of the first radio cell and the time aligned uplink component carrier of the second radio cell so that uplink transmission via the time aligned uplink component carrier of the first radio cell and the time aligned uplink component carrier of the second radio cell arrives at the aggregation access point simultaneously.

The mobile terminal according to a more detailed embodiment of the invention is adapted to perform a handover to the aggregation point. The receiver unit of the mobile terminal is adapted to receive, through a radio cell controlled by a source access point, a timing advance value that indicated the time alignment to be applied by the mobile terminal to uplink transmissions on the uplink component carrier of the first radio cell.

In alternative implementation, the mobile terminal is adapted to perform a handover from a source access point to the aggregation point, and to perform a random access procedure with the aggregation access point to thereby time align the uplink component carrier of the first radio cell.

Another embodiment of the invention is providing a computer readable medium storing instructions that, when executed by a processor of a mobile terminal, cause the mobile terminal to time align uplink transmissions in a mobile communication system, by determining by the mobile terminal a reception time difference (or propagation delay difference) for downlink transmissions from an aggregation access point to the mobile terminal via a downlink component carrier of a first radio cell and via a downlink component carrier of a second radio cell, respectively, wherein the mobile terminal is configured with the first radio cell comprising the downlink component carrier and a time aligned uplink component carrier, and the second radio cell comprising the downlink component carrier and a non-time aligned uplink component carrier, and time aligning the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference (or propagation delay difference), so that uplink transmissions transmitted from the mobile terminal to the aggregation access point via the uplink component carrier of the first radio cell and the uplink component carrier of the second radio cell arrives at the aggregation access point simultaneously.

The computer readable medium according to further embodiment of the invention is storing instructions that, when executed by a processor of a mobile terminal, cause the mobile terminal to perform the steps of the method for time aligning uplink transmissions by a mobile terminal in a mobile communication system according to one of the various exemplary embodiments described herein.

**BRIEF DESCRIPTION OF THE FIGURES**

In the following the invention is described in more detail in reference to the attached figures and drawings. Similar or corresponding details in the figures are marked with the same reference numerals.

| | |
|---|---|
| **Fig. 1** | shows an exemplary architecture of a 3GPP LTE system, |
| **Fig. 2** | shows an exemplary overview of the overall E-UTRAN architecture of 3GPP LTE, |
| **Fig. 3** | shows an exemplary sub-frame boundaries on a downlink component carrier as defined for 3GPP LTE (Release 8/9), |
| **Fig. 4** | shows an exemplary downlink resource grid of a downlink slot as defined for 3GPP LTE (Release 8/9), |
| **Figs. 5 & 6** | show the 3GPP LTE-A (Release 10) Layer 2 structure with activated carrier aggregation for the downlink and uplink, respectively, |
| **Fig. 7** | shows a RACH procedures as defined for 3GPP LTE (Release 8/9) in which contentions may occur, and |
| **Fig. 8** | shows a contention-free RACH procedure as defined for 3GPP LTE (Release 8/9), |
| **Fig. 9** | exemplifies the time alignment of an uplink component carrier relative to a downlink component carrier by means of a timing advance as defined for 3GPP LTE (Release 8/9), |
| **Figs. 10 & 11** | exemplify the interruption time during a non-synchronized and synchronized handover, respectively, due to time alignment of multiple uplink component carriers, |
| **Fig.12** | exemplifies the reduction of the interruption time caused by a synchronous handover, when employing the time alignment calculation of uplink component carriers according to one of the various embodiments described herein, |
| **Fig.13** | shows an exemplary scenario in which a user equipments aggregates two radio cells, one radio cell originating from an eNodeB, and the other radio cell originating from a Remote Radio Head (RRH), |
| **Fig.14** | shows an exemplary scenario in which a user equipments aggregates two radio cells, one radio cell originating from an eNodeB, and the other radio cell originating from a Frequency Selective Repeater (FSR), |
| **Figs. 15 to 17** | show a exemplary procedures according to different exemplary embodiments of the invention allowing the user equipment to determine the correct time alignment for non-time aligned uplink component carriers in other radio cells than the reference cell, |
| **Fig.18** | shows an exemplifies the structure of a sub-frame according to one exemplary embodiment of the invention, and the transmissions thereof via three component carriers, and |
| **Fig. 19** | exemplifies the time alignment of three uplink transmissions for a single sub-frame using different timing advance values, so as to time align their reception at an aggregation access point. |

**DETAILED DESCRIPTION OF THE INVENTION**

The following paragraphs will describe various embodiments of the invention. For exemplary purposes only, most of the embodiments are outlined in relation to an orthogonal single-carrier uplink radio access scheme according to 3GPP LTE (Release 8/9) and LTE-A (Release 10) mobile communication systems discussed in the Technical Background section above. It should be noted that the invention may be advantageously used for example in a mobile communication system such as 3GPP LTE (Release 8/9) and LTE-A (Release 10) communication systems as described in the Technical Background section above, but the invention is not limited to its use in this particular exemplary communication network. The invention may be broadly used in communication systems where time alignment of uplink transmissions on multiple carriers (having different propagation delays) is desired.

The explanations given in the Technical Background section above are intended to better understand the mostly 3GPP LTE (Release 8/9) and LTE-A (Release 10) specific exemplary embodiments described herein and should not be understood as limiting the invention to the described specific implementations of processes and functions in the mobile communication network.

One aspect of the invention is to time align a non-time aligned uplink component carrier of a radio cell relative to a reference cell in which a (reference) uplink component carrier is already time aligned. The timing advance for time alignment of the non-time aligned uplink component carrier of the radio cell is determined based on the timing advance for the uplink component carrier of the reference cell and the time difference of the reception times (or propagation delay difference) for corresponding downlink transmissions via the downlink component carriers of the reference cell and the radio cell comprising the non-time aligned uplink component carrier. The time alignment mechanism may be used for time aligning transmissions on uplink component carriers that are newly configured or activated by a mobile terminal or that may require reestablishment of the time alignment (e.g. after loosing same). As will be outlined below, the new configuration of uplink component carriers may for example result from a handover of the mobile terminal to a target access point or an operation of configuring or activating an additional uplink component carrier at the mobile terminal.

Corresponding downlink transmissions may for example denote transmissions that are sent simultaneously by an access point via the downlink component carrier of the reference cell and via the radio cell comprising the non-time aligned uplink component carrier (e.g. transmissions of a given sub-frame sent via the two downlink component carriers). In this case the reception time difference is also the time difference of the propagation delay of the transmission sent via the downlink component carrier of the reference cell and propagation delay of the transmission sent via the downlink component carrier of the radio cell comprising the non-time aligned uplink component carrier (also referred to as "propagation delay difference" in the following). Hence, in this case the determination of the timing advance for time alignment of the non-time aligned uplink component carrier of the radio cell is determined based on the timing advance for the (uplink component carrier of the) reference cell and the propagation delay difference of downlink transmissions via the downlink component carriers of the reference cell and the radio cell comprising the non-time aligned uplink component carrier.

For the purpose of time alignment, it is — strictly speaking - not necessary that the reference cell is configured an uplink component carrier. It would be sufficient that the mobile terminal is provided with a reference timing advance value to be used, and further there is downlink component carrier received through the reference cell, based on which the reception time difference (or propagation delay difference) can be determined for time aligning the other radio cells. However, for most practical implementations it may be advantageous is the reference cell is configured with a downlink component carrier and a (time aligned) uplink component carrier.

Furthermore, in one embodiment of the invention, the reference cell relative to which the timing of the non-time aligned uplink component carrier(s) is a radio cell comprising a time-aligned uplink component carrier between the user equipment and the aggregation access point. However, the reference cell may also be a radio cell comprising a time-aligned uplink component carrier between the user equipment and another access point than the aggregation access point. The term aggregation access point (for example a base station or eNodeB) is used to denote location in the access network, i.e. a node, at which the uplink transmissions of the user equipment on the different uplink component carriers are aggregated. Aggregation refers to

- a simultaneous reception of the radio signals corresponding to transmissions (e.g. respective sub-frames) on the different uplink component carriers from the user equipment, i.e. on the physical layer, for joint physical layer processing (e.g. joint demodulation (e.g. including utilization of one IFFT (Inverse Fast Fourier Transform) for the processing of the received sub-frame in an OFDM system) and/or joint decoding of coded transport block(s), etc.) by the aggregation access point;

and/or

- a processing of protocol data units received in the transmissions (e.g. respective sub-frames) on the different uplink component carriers from the user equipment in a protocol entity of the aggregation access point.

The conjoint processing of protocol data units received in the transmissions on the different uplink component carriers from the user equipment may be - in one exemplary implementation — the conjoint processing of PDUs obtained from the transmissions on the different uplink component carriers in the MAC layer or RLC layer of the aggregation access point, e.g. for the purpose of PDU reordering.

In other words, in one exemplary embodiment of the invention, the aggregation access point denotes the network node which is to receive the radio signals corresponding to transmissions (e.g. respective sub-frames) on the different uplink component carriers, i.e. on the physical layer, from the user equipment for joint processing (e.g. demodulation and/or decoding) by the aggregation access point. In another exemplary embodiment of the invention, the aggregation access point denotes the network node which should processes protocol data units received in the transmissions (e.g. respective sub-frames) via the different uplink component carriers from the user equipment. In one exemplary implementation, the aggregation access point is a base station or eNodeB.

In line with this first aspect of the invention and according to an exemplary embodiment of the invention a method for time aligning uplink transmissions by a mobile terminal in a mobile communication system is provided. The mobile terminal is configured with a first radio cell comprising a downlink component carrier and a time aligned uplink component carrier, and a second radio cell comprising a downlink component carrier and a non-time aligned uplink component carrier. The mobile terminal determines a reception time difference (or propagation delay difference) for downlink transmissions from an aggregation access point to the mobile terminal via the downlink component carrier of the first radio cell and via the downlink component carrier of the second radio cell, respectively, and time aligns the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference (or propagation delay difference), so that uplink transmissions transmitted from the mobile terminal to the aggregation access point via the uplink component carrier of the first radio cell and the uplink component carrier of the second radio cell arrives at the aggregation access point simultaneously. Hence, no RACH procedure is needed for time alignment of the uplink component carrier in the second radio cell.

In this document, simultaneously or at the same point in time means at the same point in time plus/minus some deviation, which is in the $\mu s$ range. For example, minor differences between uplink and downlink propagation delays in a given radio cell as well as the granularity of timing advance values imply that there is no perfect time alignment of the uplink transmissions on uplink component carriers. In any case simultaneous arrival of uplink transmissions is ensured to the extent that the uplink transmissions by a mobile terminal via distinct uplink component carriers (having different propagation delays) can be processed together by the receiving aggregation access point. For example, different transmissions of one given sub-frame on the uplink component carriers are time aligned such that they are received in a manner allowing the aggregation access point to process all transmissions of the sub-frame together (joint processing).

Furthermore, it should also be noted that time alignment of uplink component carriers that are configured for a mobile terminal is of course also applicable, where the mobile terminal has to time align more than one uplink component carrier. Basically, an arbitrary number of uplink component carriers can be time aligned by the procedures described herein, as long as there is one reference time advance for an uplink component carrier.

Moreover, it should be noted that a single radio cell may comprise one or more uplink component carrier and one or more downlink component carriers. In one radio cell it may be the case that the propagation delay of all uplink and downlink component carriers can be assumed identical. Accordingly, the uplink component carriers of a radio cell can be considered to form a group of uplink component carriers that experience the same propagation delay and that may be associated to a single timing advance value. Of course, if the propagation delays of the uplink component carriers differ from each other within a radio cell (e.g. due to using a FSR), then a timing advance value for each experienced propagation delay should be provided.

Another second aspect of the invention is to suggest a procedure for time alignment of uplink component carriers for use in a handover procedure of a mobile terminal. Procedures are provided for synchronous and non-synchronous handover. The time alignment procedure as discussed above may be also used for time aligning uplink component carriers in radio cells controlled by the target (aggregation) access point to which the mobile terminal is handed over. According to this aspect, the timing advance for one of the uplink component carriers in a radio cell (i.e. the reference cell) of the target (aggregation) access point may be either provided to the mobile terminal (synchronized handover) or may be determined by the mobile terminal (non-synchronized handover), e.g. by means of performing a random access procedure. The other uplink component carrier(s) of the other radio cell(s) to be used by the mobile terminal may then be time aligned relative to the reference cell as described previously herein.

In case a mobile terminal, also denoted user equipment in the 3GPP terminology, is aggregating component carriers that stem from sources in different bands and physical locations, due to different propagation conditions these component carriers all might have different propagations delay.

Under the premises that an aggregation access point (e.g. eNodeB) is processing the uplink transmissions via all configured component carriers of a given mobile terminal, the uplink transmissions from the mobile terminal should arrive simultaneously (at the point in time) at the aggregation access point even though the propagation delays on the component carriers are different. Hence the aggregation access point could configure the mobile terminal with a different timing advance for each uplink component carrier depending on it's specific propagation delay. The propagation delay is likely to be the same for component carriers that lie in the same frequency band and that are terminated at the same location (i.e. by one access point). Hence it may be suitable to group certain component carries into timing advance groups where all the member component carriers of a given group transmit with the same timing advance specific to this group in the uplink.

When considering for example a state-of-the-art 3GPP communications system setting several timing advances for one user equipment would imply that several RACH procedures, one RACH procedure for each timing advance group, would need to be performed. Thus the eNodeB can determine the propagation delay for each component carrier group in the uplink based the RACH preamble 701, 802 and would then set the appropriate timing advance for each component carrier group needed using the Random Access Response message 702, 802 (see Fig. 7 and Fig. 8). This would imply a significant delay caused by executing several RACH procedures assuming that a user equipment can only perform a single RACH procedure at a time.

Likewise, upon a handover, a user equipment would have to acquire a timing advance value for the component carriers in the target cell through RACH procedures, which would mean that there is an increased interruption time between the "RRC connection reconfiguration" message and the "RRC connection reconfiguration completed" message, where UE cannot receive or transmit data. Fig. 10 exemplifies the steps within a conventional non-synchronized handover of a user equipment from a source eNodeB to a target eNodeB. After the user equipment receiving a RRC connection reconfiguration message from the source eNodeB the user equipment acquires downlink synchronization in the target primary cell (PCell) first and performs a random access procedure (RACH procedure) resulting in a time alignment of the uplink component carrier(s) of the primary cell. Furthermore, in case the user equipment is configured with additional component carriers by the target eNodeB (in this example, component carriers of two component carrier groups (CoCa Group 1 and 2)) that experience different propagation delays then the user equipment would need to perform additional RACH procedures (in this example, a RACH procedure of CoCa Group 1 and another RACH procedure of CoCa Group 2) that contribute to the handover delay. Upon having time aligned all configured uplink carriers, the user equipment finishes the non-synchronized handover by sending a RRC connection reconfiguration complete message.

As highlighted in Fig. 11, in case of a synchronous handover the user equipment would be provided with the timing advance value for the primary cell of the target eNodeB which would allow avoiding the RACH procedure for the primary cell (PCell). However, still the RACH procedures for uplink component carriers of all other timing advance groups (CoCa Group 1 and 2) would need to be performed to appropriately establish the timing advances for the respective uplink component carriers.

Assuming for exemplary purposes that there is an aggregation access point in the network and that there are at least two component carriers that stem from at least two different physical locations (e.g. due to involvement of a remote radio head, RRH), respectively, that are experiencing different propagation delays (e.g. because the signal path is through a frequency selective repeater) and further assuming that the mobile terminal has at least one uplink component carrier which is time aligned (i.e. the uplink component carrier of the reference cell), the mobile terminal can derive the necessary timing advance for the non-aligned component carrier(s) from one reference timing advance, i.e. the timing advance of the already time aligned uplink component carrier in the reference cell. Furthermore, it should be noted that this is true as long as the uplink propagation delay is the same as the downlink propagation delay for the uplink component carrier and the downlink component carrier of a given radio cell..

The timing advance for a given non-time aligned uplink component carrier of a radio cell is determined based on the timing advance (for the uplink component carrier) in the reference cell and a reception time difference or propagation delay difference of transmissions receiving through a downlink component carrier of the reference cell and through a downlink component carrier of the radio cell comprising the non-time aligned uplink component carrier.

In the following the procedure for determining the timing advance for non-timer aligned uplink component carrier according to exemplary embodiments of the invention will be described with reference to a 3GPP based system for exemplary purposes only. In the following examples, the aggregation access point is corresponding to an eNodeB, while a further access point is formed by a Remote Radio Head (RRH) or a Frequency Selective Repeater (FSR).

For exemplary purposes the uplink and downlink component carriers are assumed to have a slotted structure, i.e. transmissions in the uplink and downlink are transmitted in sub-frames. In the downlink, a sub-frame structure as exemplarily shown in Fig. 3 and Fig. 4 can be used, but the invention is not limited thereto. Similarly, in the uplink, a sub-frame structure as exemplified in Fig. 3 and Fig. 4 can be used, but the invention in not limited thereto. The number of subcarriers (i.e. the bandwidth) for an uplink component carrier may be different from the number of subcarriers (i.e. the bandwidth) of a downlink component carrier. The uplink component carriers may have different bandwidths. Likewise the downlink component carriers may have different bandwidths.

Furthermore, in the uplink, a single sub-frame is assumed to span the entire bandwidth (i.e. all subcarriers (or sub-bands)) of all uplink component carriers aggregated by an access point (e.g. eNodeB). From the perspective of a user equipment, a single sub-frame is spanning the entire bandwidth (i.e. all subcarriers (or sub-bands)) of all component carriers configured by the mobile terminal in the uplink or downlink, respectively. Hence, the data sent within in one sub-frame is transmitted as an individual transmission of modulated symbols (e.g. OFDM symbols) on each component carrier configured in the uplink or downlink, respectively. Therefore, order to process a given single sub-frame that is transmitted in the downlink or uplink the mobile terminal (e.g. the user equipment) or the access point (e.g. the base station or eNodeB) needs to receive all transmissions of the sub-frame on the respective downlink component carriers configured by the mobile terminal, respectively, all uplink component carriers received by the (aggregation) access point (e.g. eNodeB).

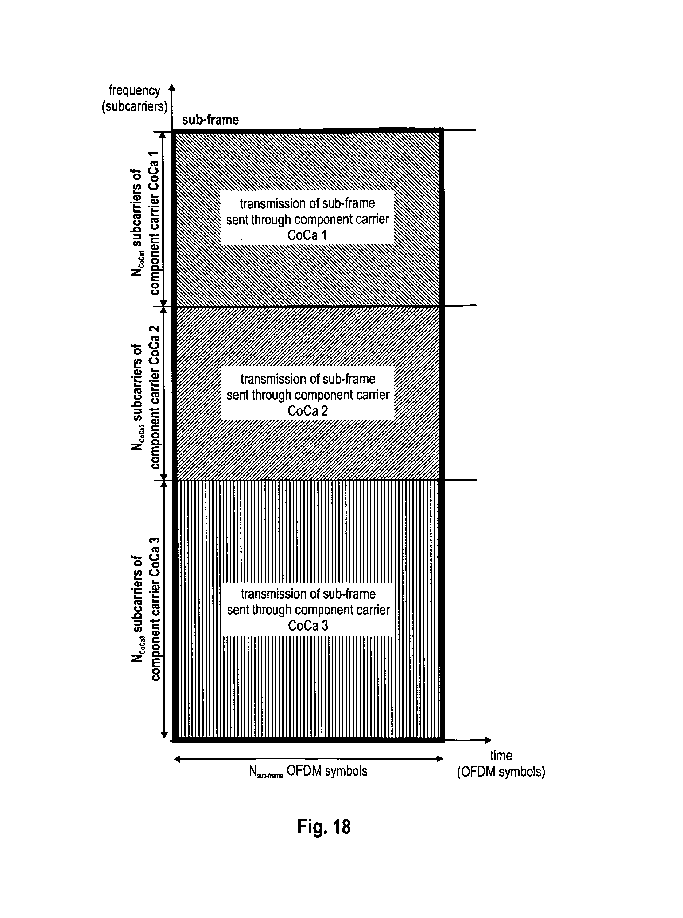

Fig. 18 exemplarily shows a sub-frame that is to be transmitted via three component carriers in the uplink.

Assuming for example an OFDM-based communications system, a sub-fame can be defined as a set of $N_{sub-frame}$ consecutive OFDM symbols (for example 12 or 14 OFDM symbols) in the time domain and a set of subcarriers corresponding to the — here three - difference component carriers in the frequency domain. For exemplary purposes, three component carriers CoCa 1, CoCa 2 and CoCa 3 are shown that comprise each $N_{CoCa1}$, $N_{CoCa2}$, and $N_{CoCa3}$ subcarriers respectively. The subcarriers of the component carriers may also be grouped into individual sub-bands. Further, strictly speaking, the sub-frame does not necessarily span a continuous region of subcarriers in the frequency domain; the different subcarriers of the component carriers may also be spaced in the frequency domain. Similarly, the number of the subcarriers of the individual component carriers (i.e. their bandwidth) may or may not be the same for the different component carriers. E.g. component carriers CoCa 1 and CoCa 2 could be component carriers providing each a bandwidth of 5 MHz, while component carrier CoCa 3 has a bandwidth of 10 MHz.

The modulation symbols of a respective OFDM symbol that are located on the subcarriers of a given component carrier are considered a transmission of the sub-frame. Hence, in the example shown in Fig. 18, a single sub-frame is transmitted by means of three transmissions on the three component carriers CoCa 1, CoCa 2 and CoCa 3.

In this connection, time alignment of the transmissions on an uplink component carrier means that the mobile terminal shifts (in time) the sub-frame structure of the respective uplink component carrier relative to the boundaries of the sub-frames received in the downlink (e.g. the sub-frame boundaries of the downlink component carrier of the reference cell or the radio cell to which the uplink component carrier to be time-aligned belongs). The timing advance (value) indicates the shift in time to be applied relative to the beginning/timing of the sub-frames in the reference sub-frame structure received in the downlink by the mobile terminal. In case of appropriately configuring the timing advance for the uplink component carriers (of different radio cells with different propagation delays and/or of different mobile terminals) the access point can ensure that the uplink sub-frame boundaries are aligned for all uplink component carriers.

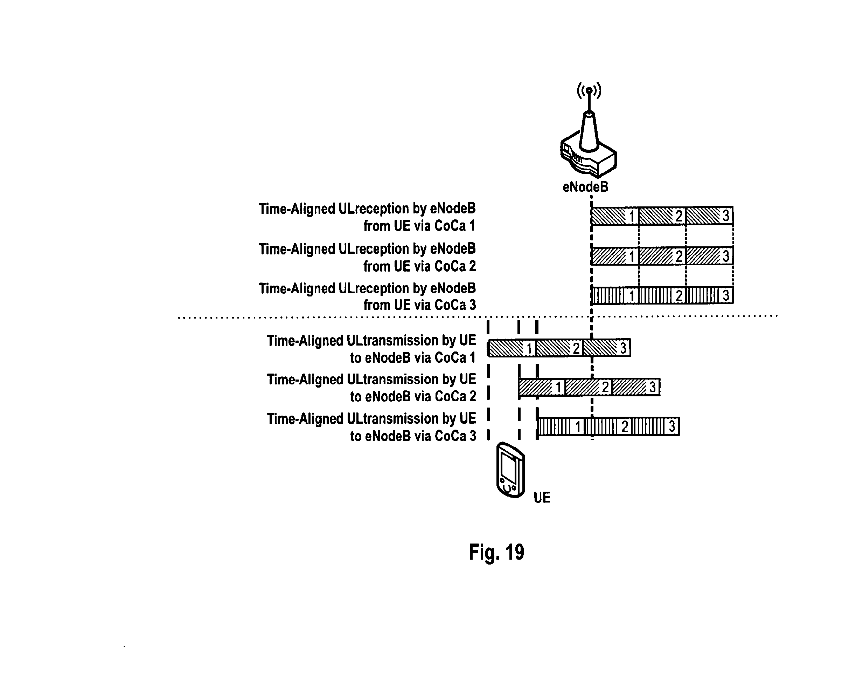

Fig. 19 exemplarily shows the transmission of three consecutive sub-frames (numbered 1, 2 and 3) via three uplink component carriers (as shown in Fig. 18). Due to the user equipment UE using individual timing advance values for the three component carriers CoCa1, CoCa 2 and CoCa 3, which are assumed to have different propagation delays for exemplary purposes, the individual transmissions of the respective single sub-frames become time aligned with respect to their reception at the eNodeB. This facilitates, for example, that the physical layer entity of the eNodeB can a single IFFT operation when processing the individual sub-frames.

In one exemplary embodiment of the invention, the timing advance value $TA_{AP2}$ of a (non-time aligned) uplink component carrier of a radio cell is calculated at the mobile terminal based on the known timing advance value $TA_{AP1}$ of the (time-aligned) uplink component carrier of the reference cell, and further based reception time difference (or propagation delay difference) $\Delta T_{prop}$, as follows:

$$TA_{AP2} = TA_{AP1} + 2 \cdot \Delta T_{prop} \qquad\qquad (Equation\ 1)$$

The timing advance value $TA_{AP1}$ of the (time-aligned) uplink component carrier of the reference cell may have been for example obtained by the mobile terminal by performing a RACH procedure as outlined with respect to Figs. 7 to 9 before, or the timing advance value $TA_{AP1}$ may have also been calculated earlier by the user equipment as described herein with reference to another reference cell.

Furthermore, in one exemplary implementation the time alignment of the reference cell and hence the value of $TA_{AP1}$ may be (constantly) updated by the access point of the reference cell. Hence, in case the timing advance of the reference cell is updated the mobile terminal may also update the timing advance values calculated relative thereto. The update of the timing advance for the uplink component carrier(s) based on the updated timing advance of the uplink component carrier in the reference cell may also include a new measurement of the reception time difference (or propagation delay difference) $\Delta T_{prop}$ since the this time difference may also be subject to changes, e.g. due to movement of the mobile terminal.

Alternatively, the update of the time alignment of the reference cell may not cause an update of the timing advance value(s) for the uplink component carrier(s) of the other radio cell(s). Instead, the aggregation access point (e.g. the eNodeB) could send update commands for the timing advance values of the respective uplink component carriers or the respective uplink component carrier groups. The update commands may for example indicate a correction of the presently set timing advance values. The update commands may be sent for example by MAC control signaling, e.g. within MAC control elements that are multiplexed to the downlink transmissions.

It is assumed in Equation 1 that the timing advance value $TA_{AP2}$ is defining the timing advance relative to the reception timing of the downlink component carrier (or to be more precise relative to the reception timing of the beginning of sub-frames transmitted via the downlink component carrier) of the radio cell the uplink component carrier of which is to be time aligned.

The reception time difference (or propagation delay difference) $\Delta T_{prop}$ can be assumed to be defined as:

$$\Delta T_{prop} = T_{DL-TCell} - T_{DL-RCell} \qquad \textit{(Equation 2)}$$

where $T_{DL\_TCell}$ denotes the point in time at which the beginning of a sub-frame is detected by the mobile terminal within a transmission via the target cell (TCell), i.e. the radio cell the uplink component carrier of which is to be time aligned, and $T_{DL-RCell}$ denotes the point in time at which the beginning of the same sub-frame is detected by the mobile terminal within a transmission via the reference cell (RCell).

In case the timing advance value $TA_{AP2}$ is defining the timing advance relative to the reception timing of the downlink component carrier of the reference cell, the timing advance value $TA_{AP2}$ is calculated as follows:

$$TA_{AP2} = TA_{AP1} + \Delta T_{prop} \qquad \textit{(Equation 3)}$$

However, defining the timing advance value $TA_{AP2}$ as in Equation 3 may have the disadvantage that in case the reference cell is "dropped", i.e. the component carrier(s) of the reference cell are deactivated or no longer configured (e.g. due to handover), the mobile terminal may need to recalculate all timing advance values. This is true in case the loss of the (time alignment in the) reference cell is also implying a loss of the time alignment of all other radio cells that are time aligned relative thereto. However, it may also be the case that after initial time alignment relative to the reference cells, the time alignment of the individual radio cells (i.e. uplink component carriers) is individually or group-wise updated by the aggregation access point, so that a loss of the reference cell does not necessarily require a new time alignment of the other radio cells configured by the mobile terminal.

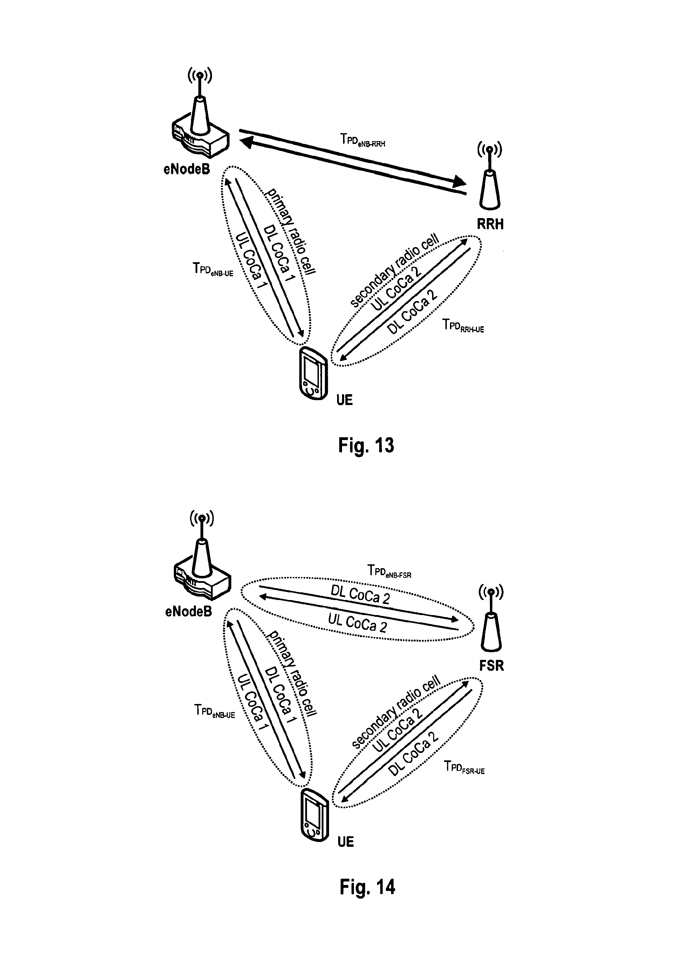

In the following the determination of the timing advance for non-time aligned uplink component carriers (non-time aligned radio cells) will be outlined in further detail and reference to some exemplary scenarios. In the exemplary scenario shown in Fig. 13, it is assumed that a user equipments aggregates two radio cells, one radio cell originating from a first location, e.g. an eNodeB, and the other radio cell originating from a different location, e.g. a Remote Radio Head (RRH). A RRH denotes a radio equipment that is connected to and remote to an access point, such as a base station (e.g. a eNodeB in 3GPP based systems) which is controlling the RRH. The interface between the access point and the RRH may be for example use the Common Public Radio Interface (CPRI) standard — see www.cpri.info. The RRH and its controlling access point may be for example interconnected via a fiber optic cable.

Transmissions via the uplink component carriers of the two radio cells are processed in the same aggregation node, i.e. the eNodeB in this example, and the propagation delay of the downlink component carrier and the uplink component carrier of each radio cell is the same. The radio cell comprising the uplink component carrier UL CoCa 1 and the downlink component carrier DL CoCa 1 between the mobile terminal UE and the eNodeB is denoted the primary radio cell (e.g. the PCell of the user equipment), while the radio cell comprising the uplink component carrier UL CoCa 2 and the downlink component carrier DL CoCa 2 between the mobile terminal UE and the RRH is denoted secondary radio cell (e.g. a SCell of the user equipment). All transmissions sent from the user equipment via the secondary cell are received by the transceiver of the RRH and a forwarded to the eNodeB via the interface between RRH and eNodeB. Similarly, when transmitting data via the RRH, the eNodeB transmits the data to the RRH e.g. using CPRI protocols and the RRH forwards the data to the user equipment via the downlink component carrier of the secondary cell.

The primary radio cell may be considered to be the PCell of the user equipment in this example and is the reference cell for time alignment. However, also any other radio cell that the user equipment aggregates and which is currently timing aligned can serve as a reference cell. For example, the time alignment of the uplink component carrier UL CoCa1 in the primary radio cell may have been set by the eNodeB through a RACH procedure performed in the primary radio cell.

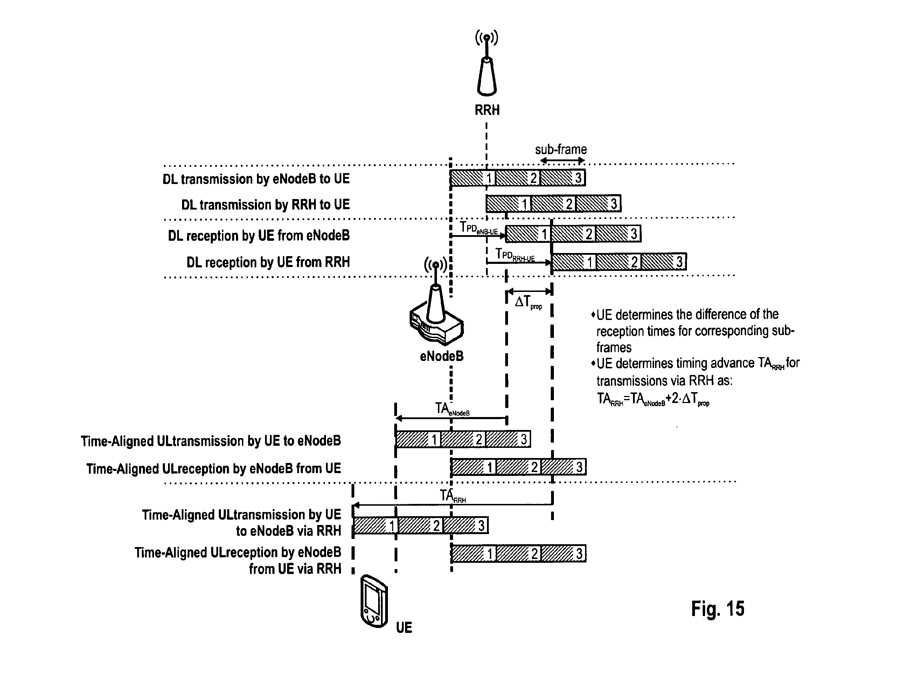

Fig. 15 is showing a procedure according to an exemplary embodiment of the invention allowing the user equipment to determine the correct time alignment for non-time aligned uplink component carriers in other radio cells than the reference cell. For exemplary purposes, it is assumed that the eNodeB is the aggregation access point and that the RRH servers as an additional access point, as outlined with respect to Fig. 13 above. The eNodeB transmits sub-frames in the downlink to the user equipment via the primary and secondary radio cell, respectively. For exemplary purposes, it is assumed that the eNodeB transmits all transmissions of a single sub-frame (corresponding transmissions) simultaneously. Corresponding transmissions of a given sub-frame are indicated by the same number in Fig. 15. Since the transmissions of a given sub-frame take different propagation paths, the respective transmissions of the given sub-frame are received at different points in time at the user equipment, as highlighted in the upper part of Fig. 15.

The time shift between the transmission of a sub-frame by the eNodeB and the RRH is for example due to the transmission of the sub-frame via the RRH being forwarded by the eNodeB via the interface to the RRH (propagation delay $TPD_{eNB-RRH}$) and from the RRH to the user equipment (propagation delay $TPD_{RRH-UE}$). Furthermore, there may be also a non-neglectable processing delay $TPROC_{RRH}$ of the sub-frames at the RRH, which may need to be taken into account. The propagation delay of the transmission of a sub-frame from the eNodeB to the user equipment via the primary cell is denoted $TPD_{eNB-UE}$.

The user equipment measures the time difference $\Delta T_{prop}$ between the reception of corresponding transmissions of a sub-frame. In more detail, the user equipment determines the difference between the reception times of a transmission of a sub-frame #$i$ via a downlink component carrier of the radio cell in which the uplink component carrier is to be time aligned, and a transmission of the sub-frame #$i$ via a downlink component carrier of the reference radio cell. In the example shown in Fig. 15, where the primary radio cell of the eNodeB is the reference cell for time alignment, the user equipment determines at what point in time the beginning of a sub-frame transmitted via a downlink component carrier of the reference cell is received, and at what point in time the beginning of the of the very same sub-frame via downlink component carrier of the radio cell of the RRH is received, and calculates the time difference $\Delta T_{prop}$ of these two reception times.

Time difference $\Delta T_{prop}$ between the reception of corresponding transmissions of a sub-frame assuming a scenario as shown in Fig. 13 is defined as

$$\Delta T_{prop} = (T_{PD_{eNB-RRH}} + T_{PROC_{RRH}} + T_{PD_{RRH-UE}}) - T_{PD_{eNB-UE}} \qquad \textit{(Equation 4)}$$

where the term $TPROC_{RRH}$ may be omitted. Since the eNodeB sends all transmissions of the sub-frame simultaneously, $\Delta T_{prop}$ actually denotes the propagation delay difference of the transmission of the sub-frames via the reference cell (primary radio cell) and the secondary radio cell as shown in Fig. 13.

In order to ensure that corresponding transmissions of a sub-frame arrive simultaneously at the eNodeB when sending them through different uplink component carries experiencing different propagation delays, the user equipment needs to compensate the measured propagation delay difference and advance the transmissions further (relative to the uplink transmission on the uplink component carrier of the reference cell). Hence, in the exemplary scenario of Fig. 13, the transmissions of sub-frames on uplink component carrier UL CoCa 2 via the RRH is to be advanced by the reference timing advance $TA_{eNodeB}$ (which is known to the user equipment) and two times the time difference $\Delta T_{prop}$ measured by the user equipment. Thus the correct timing advance to be applied for the uplink transmissions of the sub-frames sent via the RRH can be calculated as

$$TA_{RRH} = TA_{eNodeB} + 2 \cdot \Delta T_{prop} \qquad \textit{(Equation 5)}$$

As mentioned earlier, the timing advance value $TA_{eNodeB}$ of the reference cell/reference uplink component carrier UL CoCa 1 may have been learned by the user equipment from a RACH procedure with the eNodeB or may have been determined in the manner described above based on the known timing advance from another/previous reference cell.

The eNodeB controlling the reference cell in the scenario of Fig. 13 may constantly adjust the time alignment of the uplink component carrier UL CoCa 1 by sending continuous updates of the timing advance value $TA_{eNodeB}$. The updates of the timing advance may be for example sent via MAC signaling, e.g. using MAC control elements multiplexed into a downlink transmission sent to the user equipment.

In one further exemplary embodiment of the invention, the time alignment of an uplink component carrier could be controlled by means of a timer. A separate timer may be maintained by the mobile terminal for each timing advance value (each associated to either an individual uplink component carrier or a uplink component carrier group). The mobile terminal resets and starts the timer each time it receives an update command for a given timing advance value (respectively, plink component carrier or a uplink component carrier group). Whenever the timer expires, i.e. timing alignment is considered to be lost, time alignment can be reestablished by the mobile terminal using the mechanisms described herein, e.g. the mobile terminal can recalculate the timing advance value based on the reference cell and a new measurement of the reception time difference (or propagation delay difference) or the user equipment could alternatively perform a RACH procedure to reestablish time alignment.

Thus an uplink ⎯ in practice - can be considered to be timing aligned as long as the user equipment maintains a reference timing alignment on another radio cell's uplink.

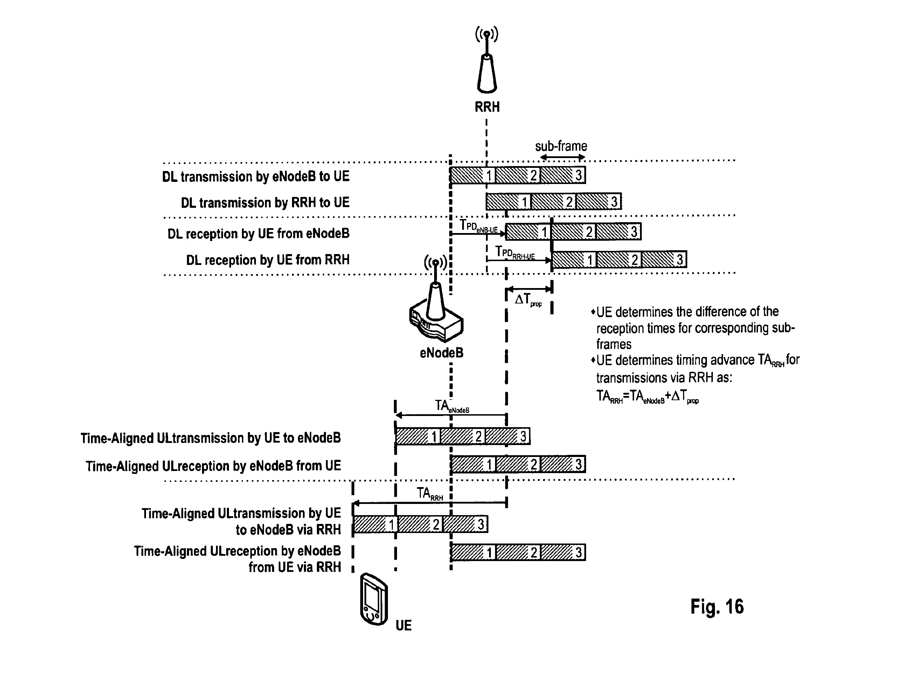

As exemplified in Fig. 16, the timing advance value $TA_{RRH}$ may also be calculated relative to the reception timing of the downlink sub-frame boundaries on a downlink component carrier with the reference cell, i.e. downlink component carrier DL CoCa 1 of the primary radio cell as shown in Fig. 13. Accordingly, the equation for calculating the timing advance value $TA_{RRH}$ for the uplink component carrier UL CoCa 2 in the secondary radio cell would be changed to:

$$TA_{RRH}= TA_{eNodeB} + \Delta T_{prop} \qquad\qquad (Equation\ 6)$$

where the values $TA_{eNodeB}$ and $\Delta T_{prop}$ remain unchanged in comparison to Equation 5.

Furthermore, in the examples of Fig. 15 and Fig. 16, the timing advance values $TA_{RRH}$ and $TA_{eNodeB}$ have been chosen to not only align the uplink transmissions on the uplink component carriers with respect to the sub-frame boundaries, but also to aligned the sub-frame boundaries in the uplink and downlink component carriers. However, this is not mandatory.

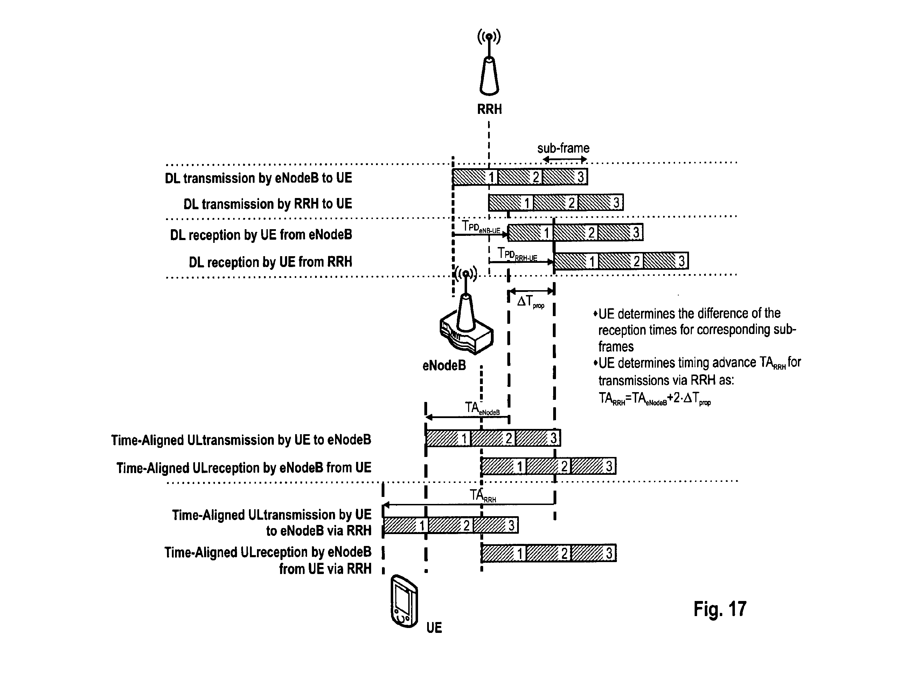

As exemplified in Fig. 17, the timing advance values for the uplink component carriers may be also chosen so that the sub-frame boundaries in the uplink and downlink component carriers are not aligned. This may be for example achieved in case the reference timing advance value (denoted $TA_{AP1}$ or $TA_{eNodeB}$ in the examples above) is configured by the aggregation access point (e.g. eNodeB) so as to not correspond to two times the propagation delay between the aggregation access point and the mobile terminal, as for example shown in Fig. 9. The timing advance values for non-aligned uplink component carrier(s) may be then still determined as outlined above with respect to Fig. 15 and 16 based on this reference timing advance value. However, the timing advance value(s) calculated on such reference timing advance value will then still align the sub-frame boundaries on the uplink component carriers, but not the sub-frame boundaries of uplink and downlink component carriers.

The same assumptions and calculations that are described above may also be used in scenarios where the over-the-air signal between mobile terminal and aggregation access point, and vice versa, is passing through a Frequency Selective Repeater (FSR). A FSR may also be referred to as a bi-directional amplifier (BDA). The FSR is an apparatus that used for boosting the radio signals of a wireless system in a local area by receiving the radio signal by means of a reception antenna, amplifying the received radio signal with a signal amplifier and broadcasting the amplified radio signal via an internal antenna. The operation of the FSR is commonly transparent to the other network nodes, i.e. the access points and mobile terminals. The FSR may be assumed to boost the radio signals of one or more component carriers in the downlink and uplink. In case only a subset of the configured component carriers is amplified by a FSR, the radio signals of the different component carriers may experience different propagation delays, similar to the situation discussed previously herein with respect to Fig. 13.

One difference between the usage of a RRH or a FSR is the location of reception of the physical layer. Physical layer reception of the uplink transmissions for the radio cells that originate at the location of the aggregation access point (e.g. eNodeB) takes place at the aggregation access point, while for the radio cells originating from the location of the RRH for physical layer reception takes place at the RRH. Inherently, the method of time alignment described above for the scenario shown in Fig. 13 adjusts the uplink timing for the radio cells being received at the RRH in manner that all uplink transmissions of all mobile terminal arrive at the same time at the RRH, which is important for interference-free reception of all uplink radio signals arriving from all mobile terminals at the RRH. Furthermore, since processing delay in the RRH and propagation delay from RRH to aggregation access point (e.g. eNodeB) can be assumed to be the same for all uplink radio signals received at the RRH, all uplink data forwarded by the RRH arrive at the aggregation access point at the same time as well, which is beneficial for further processing in higher layers.

For the case that a Frequency Selective Repeater is used, all uplink radio signals are received at the location of the aggregation access point (e.g. the eNodeB). Hence, the physical radio signals of all uplink transmissions for all radio cells should advantageously arrive at the same time instance, in order to ensure interference-free physical layer processing.

Fig. 14 exemplifies a scenario, where a FSR is used to boost the downlink and uplink component carriers (DL/UL CoCa 2) of a secondary radio cell, while the radio signals of the downlink and uplink component carriers (DUUL CoCa 1) of a primary radio cell are not amplified by the FSR. In this scenario it is assumed that the uplink and downlink component carriers of the secondary radio cell are boosted by the FSR and that the user equipment is not receiving the uplink and downlink carriers of the secondary radio cell from the directly eNodeB. Hence, in this scenario it can be again assumed that the propagation delay of uplink and downlink component carriers within the secondary radio cell is different from the propagation delay of uplink and downlink component carriers within the primary radio cell. Furthermore, there is no propagation delay difference between the uplink and downlink component carriers within the secondary radio cell.

In case it is further assumed that the timing advance value $TA_{eNodeB}$ for the uplink component carrier UL CoCa 1 in the primary radio cell is known, the user equipment can time align the transmissions on the uplink component carrier UL CoCa 2 in the secondary radio cell based on this reference time alignment $TA_{eNodeB}$ and the reception time difference (or propagation delay difference) between the downlink component carrier transmissions in the primary and secondary radio cells in a manner described above. Basically the same equations above can be reused, where replacing the term $TA_{RRH}$ with the term $TA_{FSR}$ denoting the timing advance value for the uplink component carrier UL CoCa 2 in the secondary radio cell.

Since the utilization of a FSR may not be known to the mobile terminal — as it is operating in a transparent fashion - the aggregation access point (e.g. eNodeB) may inform the mobile terminal(s) whether it (they) are allowed to calculate timing advance values based on a reference cell or not. The aggregation access point (e.g. eNodeB) may be aware of the network configuration and thus also about the use and configuration of FSR(s) in its vicinity.

*Configuration of Timing Advance method by Aggregation Access Point*

As already indicated above the mobile terminal (e.g. user equipment) may be unaware of the location the different radio cells it is aggregating are stemming from. Hence, in this case, the mobile terminal is also unaware of the actual propagation delay it's uplink transmissions experience. Since mobile terminal may also not know whether both uplink and downlink of a radio cell are transmitted from the same location, in one further embodiment of the invention the methods for time aligning the uplink component carriers depending on a reference cell may for example be applied only in case the aggregation access point is authorizing this procedure. For example, in a 3GPP based mobile communications system, only the eNodeB knows if the user equipment's uplink transmissions experience the same propagation delay as the downlink signals received by the user equipment, since network topology and exact location of nodes (access points) and location of transmission and reception antennas is known to eNodeB.

Taking the above into account for each cell that is configured in the mobile terminal (e.g. user equipment), the aggregation access point (e.g. eNodeB) for example signal the uplink time alignment configuration mode, i.e. whether the calculation of timing advance as discussed previously herein can be applied for an uplink component carrier or uplink component carrier group, or whether initial timing advance for an uplink component carrier or uplink component carrier group is to be set through the RACH procedure.

The signaling can be for example achieved by introducing a flag indicating whether the RACH procedure is to be used for to get time aligned or whether the mobile terminal can calculate the timing advance based on the reference timing advance. The flag may be signaled for each individual radio cell or for a group of radio cells the component carriers of which experience an equal propagation delay.

The information on how to time align an uplink component carrier of a given radio cell should be available to the mobile terminal before transmission and reception on the radio cell can start. Therefore, in one exemplary implementation, the flag to signal the time alignment configuration mode may be conveyed to the mobile terminal via RRC signaling when the radio cells are configured. For example, the signaling information of the flag (e.g. one bit) to indicate the time alignment configuration mode may be for example included in a Radioresource Configuration Message of the RRC protocol.

*Synchronized and Non-Synchronized Handover*

The methods described above are also usable in a handover scenario, where the mobile terminal is to aggregate new uplink component carriers in one or more target cells. Instead of performing RACH procedure for a target radio cell, the mobile terminal can determine the uplink time alignment of the uplink component carriers relative to a reference cell controlled by the target aggregation node (or base station/eNodeB)..

Once reference timing advance has been established in a target radio cell, further radio cells that are configured from the target aggregation access point (e.g. eNodeB) for the mobile terminal (e.g. user equipment) can be time aligned without using further RACH procedures. Hence, a handover where mobile terminal shall retain several aggregated radio cells under control of the target aggregation access point will commence by using only a single RACH procedure for the case of a non-synchronized handover instead of using one RACH procedure for every timing advance to be set for the radio cells in the new target aggregation access point.

The time alignment of the new reference cell under control of the target aggregation access point can be either obtained trough a RACH procedure (for non-synchronized handover), as mentioned above, or by configuring the timing advance value for one of the target radio cells through the source aggregation access point (i.e. the access point, e.g. eNodeB, from which the mobile terminal is handed over to the new/target access point) when using a synchronized handover. In the latter case no RACH procedure may be required at all in the target cells.

In one exemplary embodiment of the invention referring to a 3GPP based mobile communications network, such as 3GPP LTE-A, the source eNodeB (serving as an aggregation access point) is initiating the handover by sending a RRC connection reconfiguration message to the user equipment, which is instructing the user equipment to perform a handover. The RRC connection reconfiguration message informs the user equipment on the new eNodeB (serving as the new aggregation access point) controlling the target radio cells which are to be configured by the user equipment. Furthermore, the RRC connection reconfiguration message indicates the radio cells to be configured by the user equipment. Optionally, i.e. in case of a synchronized handover, the RRC connection reconfiguration message also comprises a timing advance value for setting the timing advance for an uplink component carrier (or uplink component carrier group) under control of the target eNodeB.

In case of a non-synchronized handover, the user equipment establishes downlink synchronization in the target radio cells and performs a RACH procedure on one of the uplink component carriers to establish time alignment for this the uplink component carrier (or the uplink component carrier group to which the uplink component carrier belongs). Once the time alignment is established, i.e. a timing advance value is set, the other uplink component carriers configured by the user equipment may be time aligned by the methods outlined herein above. Hence, in case of a non-synchronized handover, the user equipment only needs to perform one single RACH procedure, but can time align all uplink component carriers.

In case the eNodeB does not allow for calculating the timing advance values based on a reference cell (e.g. by means of RRC control signaling), the user equipment may need to perform more than one RACH procedure to time align uplink component carriers for which the timing advance value may not be configured based on the timing advance in a reference cell. For example, the RRC connection reconfiguration message could indicate for which target radio cells the user equipment may calculate the timing advance based on a reference cell.

In case of a synchronized handover no RACH procedure at all is needed. An initial reference timing advance for a target radio cell serving as the reference is provided to the user equipment by the source eNodeB. All remaining radio cells controlled by the target eNodeB can then be time aligned using the methods described above (e.g. in case the eNodeB allow the time align the respective radio cell based on a reference timing advance). As shown in Fig. 12, the handover delay is minimized. The user equipment establishes downlink synchronization in one of the target cells (which will service as the reference cell) and configures the timing advance as provided by the eNodeB in the RRC connection reconfiguration message. Then the user equipment only needs calculate the timing advance values for the other uplink component carrier(s) or component carrier groups, and can then send the RRC connection reconfiguration complete message back to the new eNodeB to finish the handover.

Hence, the calculation of the timing advance(s) for the time alignment of uplink component carriers relative to a reference cell may significantly reduce the handover delay and thus reducing the latency and delay associated with this procedure when compared to the prior art methods for both, synchronized and non-synchronized handover.

*Hardware and Software Implementation of the Invention*

Another embodiment of the invention relates to the implementation of the above described various embodiments using hardware and software. In this connection the invention provides a user equipment (mobile terminal) and a eNodeB (base station). The user equipment is adapted to perform the methods described herein. Furthermore, the eNodeB comprises means that enable the eNodeB to determine the power status of respective user equipments from the power status information received from the user equipments and to consider the power status of the different user equipments in the scheduling of the different user equipments by its scheduler.

It is further recognized that the various embodiments of the invention may be implemented or performed using computing devices (processors). A computing device or processor may for example be general purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

It should be further noted that the individual features of the different embodiments of the invention may individually or in arbitrary combination be subject matter to another invention.

It would be appreciated by a person skilled in the art that numerous variations and/or modifications may be made to the present invention as shown in the specific embodiments without departing from the spirit or scope of the invention as broadly described. The present embodiments are, therefore, to be considered in all respects to be illustrative and not restrictive.

**Claims**

1. A method for time aligning uplink transmissions by a mobile terminal in a mobile communication system, wherein the mobile terminal is configured with a first radio cell comprising a downlink component carrier and a time aligned uplink component carrier, and a second radio cell comprising a downlink component carrier and a non-time aligned uplink component carrier, the method comprising the following steps:

   determining by the mobile terminal a reception time difference or propagation delay difference for downlink transmissions from an aggregation access point to the mobile terminal via the downlink component carrier of the first radio cell and via the downlink component carrier of the second radio cell, respectively, and
   time aligning the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference, so that uplink transmissions transmitted from the mobile terminal to the aggregation access point via the uplink component carrier of the first radio cell and the uplink component carrier of the second radio cell arrives at the aggregation access point simultaneously.

2. The method according to claim 1, wherein the downlink component carrier and the uplink component carrier of one of the radio cells is established between the aggregation access point and the mobile terminal, while the downlink component carrier and the uplink component carrier of the other radio cell is established between another access point and the mobile terminal.

3. The method according to claim 2, wherein the other access point maintains a bi-directional interface to the aggregation access point via which transmissions from and to the mobile terminal are forwarded to the aggregation access point, respectively, to the mobile terminal.

4. The method according to claim 2 or 3, wherein the other access point is a Frequency Selective Repeater (FSR) or a Remote Radio Head (RRH) controlled by the aggregation access point, and the aggregation access point is an eNode B.

5. The method according to one of claims 1 to 4, further comprising the steps of:

   transmitting uplink data via the time aligned first component carrier and the time aligned second component carrier from the mobile terminal to the aggregation access point,
   combining the uplink transmissions of the mobile terminal received via the time aligned first component carrier and the time aligned second component carrier by the aggregation access point.

6. The method according to claim 5, wherein the combination of the uplink data of the mobile terminal is performed by the RLC entity of the aggregation access point and/or by the physical layer entity of the aggregation access point.

7. The method according to one of claims 1 to 6, wherein the time aligned uplink component carrier of the first radio cell is time aligned by the mobile terminal and an access point performing a random access procedure configuring the timing advance for the uplink component carrier of the first radio cell.

8. The method according to one of claims 1 to 7, further comprising the step receiving a command from the aggregation access point to time align the uplink component carrier of the second radio cell based on the reception time difference.

9. The method according to one of claim 1 to 8, wherein determining by the mobile terminal a reception time difference or propagation delay difference for a downlink transmissions comprises calculating the reception time difference or propagation delay difference by subtracting the time of arrival the beginning of a sub-frame having a given sub-frame number and being received via the downlink component carrier of the second cell from a time of arrival the beginning of the next of the sub-frame having sane given sub-frame number and being received via the downlink component carrier of the first cell.

10. The method according to one of claims 1 to 16, wherein the mobile node maintains a respective timing advance value for each uplink component carrier or maintains a respective timing advance value for each group of one or more uplink component carriers, wherein uplink transmissions on the one or more uplink component carriers of a group experience the same propagation delay.

11. A method for performing a handover of a mobile terminal to a target aggregation access point, wherein the mobile terminal is to be configured, under control of the target aggregation access point, with a first radio cell comprising a downlink component carrier and an uplink component carrier, and a second radio cell comprising a downlink component carrier and an uplink component carrier the method comprising the steps of:

performing by the mobile terminal a random access procedure with the target aggregation access point to thereby time align the uplink component carrier of the first radio cell,

determining by the mobile terminal a reception time difference or propagation delay difference for downlink transmissions from the target aggregation access point to the mobile terminal via the downlink component carrier of the first radio cell and via the downlink component carrier of the second radio cell, and

time aligning the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference, so that an uplink transmission transmitted from the mobile terminal to the aggregation access point via the uplink component carrier of the first radio cell and via the uplink component carrier of the second radio cell arrives at the aggregation access point simultaneously.

12. A method for performing a handover of a mobile terminal from a source access point to a target aggregation access point, wherein the mobile terminal is to be configured, under control of the target aggregation access point, with a first radio cell comprising a downlink component carrier and an uplink component carrier, and a second radio cell comprising a downlink component carrier and an uplink component carrier the method comprising the steps of:

receiving, at the mobile terminal and through a radio cell controlled by the source access point, a timing advance value that indicated the time alignment to be applied by the mobile terminal to uplink transmissions on the uplink component carrier of the first radio cell,

determining by the mobile terminal a reception time difference or propagation delay difference for downlink transmissions from the target aggregation access point to the mobile terminal via the downlink component carrier of the first radio cell and via the downlink component carrier of the second radio cell, and

time aligning the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference, so that an uplink transmission transmitted from the mobile terminal to the aggregation access point via the uplink component carrier of the first radio cell and via the uplink component carrier of the second radio cell arrives at the aggregation access point simultaneously.

13. The method according to one of claims 11 or 12, further comprising the steps of the method according to one of claims 2 to 10.

14. A mobile terminal for time aligning uplink transmissions in a mobile communication system, wherein the mobile terminal is configured with a first radio cell comprising a downlink component carrier and a time aligned uplink component carrier, and a second radio cell comprising a downlink component carrier and a non-time aligned uplink component carrier, the mobile terminal:

a receiver unit adapted to receive downlink transmissions,

a processing unit adapted to determine a reception time difference or propagation delay difference for a downlink transmission from an aggregation access point to the mobile terminal via the downlink component carrier of the first radio cell and via the downlink component carrier of the second radio cell, respectively,

wherein the processing unit is adapted to time align the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference,

a transmitter unit adapted to transmit an uplink transmission to the aggregation access point via the time aligned uplink component carrier of the first radio cell and the time aligned uplink component carrier of the second radio cell so that uplink transmission via the time aligned uplink component carrier of the first radio cell and

the time aligned uplink component carrier of the second radio cell arrives at the aggregation access point simultaneously.

15. A computer readable medium storing instructions that, when executed by a processor of a mobile terminal, cause the mobile terminal to time align uplink transmissions in a mobile communication system, by:

determining by the mobile terminal a reception time difference or propagation delay difference for downlink transmissions from an aggregation access point to the mobile terminal via a downlink component carrier of a first radio cell and via a downlink component carrier of a second radio cell, respectively, wherein the mobile terminal is configured with the first radio cell comprising the downlink component carrier and a time aligned uplink component carrier, and the second radio cell comprising the downlink component carrier and a non-time aligned uplink component carrier, and

time aligning the uplink component carrier of the second radio cell by adjusting a timing advance for uplink transmissions on the uplink component carrier of the second radio cell based on the timing advance for uplink transmissions on the time aligned uplink component carrier of the first radio cell and the determined reception time difference, so that uplink transmissions transmitted from the mobile terminal to the aggregation access point via the uplink component carrier of the first radio cell and the uplink component carrier of the second radio cell arrives at the aggregation access point simultaneously.

Fig. 1

MME / Serving GW    MME / Serving GW

- - - - - - - S1 interface

— — — X2 interface

eNB

eNB

eNB

E-UTRAN

**Fig. 2**

sub-frame

downlink slot $T_{\text{slot}}$   downlink slot $T_{\text{slot}}$

$N_{\text{symb}}^{\text{DL}}$ OFDM symbols

$k = N_{\text{RB}}^{\text{DL}} N_{\text{sc}}^{\text{RB}} - 1$

$N_{\text{RB}}^{\text{DL}} \times N_{\text{sc}}^{\text{RB}}$ subcarriers

$k = 0$

$l = 0$          $l = N_{\text{symb}}^{\text{DL}} - 1$

**Fig. 3**

One downlink slot $T_{slot}$

$N_{symb}^{DL}$ OFDM symbols

$k = N_{RB}^{DL} N_{sc}^{RB} - 1$

Resource block
$N_{symb}^{DL} \times N_{sc}^{RB}$ resource elements

Resource element $(k, l)$

$N_{RB}^{DL} \times N_{sc}^{RB}$ subcarriers

$N_{sc}^{RB}$ subcarriers

$k = 0$

$l = 0$

$l = N_{symb}^{DL} - 1$

**Fig. 4**

Fig. 5

**Fig. 6**

UE                                                                    eNodeB

Random Access Preamble 701

Random Access Response 702

Scheduled Transmission 703

Contention Resolution 704

**Fig. 7**

UE                                                                    eNodeB

Random access Preamble Assignement 801

Random Access Preamble 802

Random Access Response 803

**Fig. 8**

DL transmission by eNodeB to UE

DL reception by UE from eNodeB

$PD_{eNB-UE}$

$TA=2 \cdot PD_{eNB-UE}$

UE applies timing advance of $TA=2 \cdot PD_{eNB-UE}$ relative to the DL reception timing (TA is informed by eNB)

Time Aligned UL transmission by UE to eNodeB

Time Aligned UL reception by eNodeB from UE

$PD_{eNB-UE}$

sub-frame

eNodeB

UE

Fig. 9

**Fig. 10**

RRC connection reconfiguration

interruption time due to handover

downlink synchronization

RACH procedure in PCell

RACH procedure for CoCa Group 1

RACH procedure for CoCa Group 2

RRC connection reconfiguration complete

time

**Fig. 11**

RRC connection reconfiguration

interruption time due to handover

downlink synchronization

RACH procedure for CoCa Group 1

RACH procedure for CoCa Group 2

RRC connection reconfiguration complete

time

**Fig. 12**

RRC connection reconfiguration

interruption time due to handover

downlink synchronization

determination of TA values

RRC connection reconfiguration complete

time

EP 2 498 556 A1

Fig. 13

Fig. 14

33

Fig. 15

EP 2 498 556 A1

RRH

sub-frame

DL transmission by eNodeB to UE | 1 2 3

DL transmission by RRH to UE | 1 2 3

DL reception by UE from eNodeB | $T_{PD_{eNB-UE}}$ | 1 2 3

DL reception by UE from RRH | $T_{PD_{RRH-UE}}$ | 1 2 3

eNodeB

$\Delta T_{prop}$

• UE determines the difference of the reception times for corresponding sub-frames
• UE determines timing advance $TA_{RRH}$ for transmissions via RRH as:

$$TA_{RRH} = TA_{eNodeB} + \Delta T_{prop}$$

$TA_{eNodeB}$

Time-Aligned ULtransmission by UE to eNodeB | 1 2 3

Time-Aligned ULreception by eNodeB from UE | 1 2 3

$TA_{RRH}$

Time-Aligned ULtransmission by UE to eNodeB via RRH | 1 2 3

Time-Aligned ULreception by eNodeB from UE via RRH | 1 2 3

UE

Fig. 16

EP 2 498 556 A1

Fig. 17

Fig. 18

Fig. 19

EP 2 498 556 A1

EUROPEAN SEARCH REPORT

Application Number

EP 11 00 1914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HUAWEI: "Different Timing Advance Impact on Carrier Aggregation", 3GPP DRAFT; R2-095815 DIFFERENT TIMING ADVANCE IMPACT ON CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390299, [retrieved on 2009-10-06] * page 1 - page 2; figures 2,3 * ----- | 1-15 | INV. H04W56/00 |
| Y | NTT DOCOMO ET AL: "Reference DL CC for TA", 3GPP DRAFT; R2-103221, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510, 4 May 2010 (2010-05-04), XP050423303, [retrieved on 2010-05-04] * page 1 - page 2 * ----- | 2-15 | |
| Y | ERICSSON AND ST-ERICSSON: "Text proposal for CA BS TR: Time alignment between carriers", 3GPP DRAFT; R4-102578, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG4, no. Bratislava; 20100628, 23 June 2010 (2010-06-23), XP050454731, [retrieved on 2010-06-23] * page 2 - page 5; figures 1-5 * ----- -/-- | 2-15 | TECHNICAL FIELDS SEARCHED (IPC) H04W |

The present search report has been drawn up for all claims

| Place of search | Date of completion of the search | Examiner |
|---|---|---|
| Munich | 12 July 2011 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

Europäisches
Patentamt

European
Patent Office

Office européen
des brevets

# EUROPEAN SEARCH REPORT

**Application Number**

EP 11 00 1914

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | RAN WG4: "Reply LS on multiple timing advance for inter-band CA", 3GPP DRAFT; R1-103296(R4-101477), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Montreal, Canada; 20100510, 7 May 2010 (2010-05-07), XP050420399, [retrieved on 2010-05-07] * the whole document * | 1-15 | |
| T | ERIK DAHLMANN ET AL: "3GEvolution: HSPA and LTE for Mobile Broadband, passage", 1 June 2008 (2008-06-01), 3G EVOLUTION : HSPA AND LTE FOR MOBILE BROADBAND, ACADEMIC PRESS IN ELSEVIER, NL, PAGE(S) 490 - 495, XP002591334, ISBN: 978-0-12-374538-5 | 1-15 | |
| Y | HUAWEI: "Multiple Timing Advance Impact on RAN2", 3GPP DRAFT; R2-100110 MULTIPLE TIMING ADVANCE IMPACT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050420934, [retrieved on 2010-01-12] * page 1 - page 4; figures 1-3; table 1 * | 2-15 | **TECHNICAL FIELDS SEARCHED (IPC)** |

The present search report has been drawn up for all claims

| Place of search | Date of completion of the search | Examiner |
|---|---|---|
| Munich | 12 July 2011 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **STEFANIA SESIA ; ISSAM TOUFIK ; MATTHEW BAKER.** LTE — The UMTS Long Term Evolution: From Theory to Practice. John Wiley & Sons, Ltd, 2009